# EUROPÄISCHE PATENTSCHRIFT

(11) **EP 0 913 276 B1**
(45) Veröffentlichungstag und Bekanntmachung des Hinweises auf die Patenterteilung: **12.05.2004**
(21) Anmeldenummer: 98120154.4
(22) Anmeldetag: 28.10.1998
(51) Int. Cl.: B60D 1/52, B60D 1/62

(54) **Anhängevorrichtung**
Towing device
Dispositif d'attelage

(30) Priorität: 28.10.1997 DE 19747469
(43) Veröffentlichungstag der Anmeldung: 06.05.1999
(73) Patentinhaber: ORIS FAHRZEUGTEILE HANS RIEHLE GmbH, 71696 Möglingen (DE)
(72) Erfinder: Riehle, Hans, 71638 Ludwigsburg (DE)
(74) Vertreter: Hoeger, Stellrecht & Partner

(56) Entgegenhaltungen:
- EP-A- 0 491 241
- DE-A- 3 833 471
- DE-A- 4 142 317
- DE-U- 8 712 103

## Beschreibung

Die Erfindung betrifft eine Anhängevorrichtung für Kraftfahrzeuge, umfassend ein fahrzeugfestes Aufnahmeteil, einen lösbar mit dem Aufnahmeteil verbindbaren Kugelhals, eine an einem ersten Ende des Kugelhalses angeordnete Kupplungskugel und ein an einem zweiten Ende des Kugelhalses angeordnetes Verriegelungsteil, welches in eine Aufnahme des Aufnahmeteils einsetzbar und in dieser verriegelbar ist, einen eine Steckdose für einen Stecker zur Anhängerstromversorgung haltenden Träger, welcher von einer die Steckdose zur Benutzung positionierenden Nutzstellung in eine Aufbewahrstellung relativ zu einer Fahrzeugkarosserie bewegbar ist.

Eine derartige Anhängevorrichtung ist beispielsweise aus dem deutschen Patent 41 42 317 A bekannt, wobei bei diesem das Einsetzen des Verriegelungsteils dazu führt, daß der Träger mit der Steckdose von der Aufbewahrstellung in die Nutzstellung verschwenkt wird.

Ausgehend von diesem Stand der Technik liegt der Erfindung die Aufgabe zugrunde, eine Anhängevorrichtung der gattungsgemäßen Art derart zu verbessern, daß das Verschwenken des Trägers mit der Steckdose möglichst vorteilhaft mit dem Einsetzen des Verriegelungsteils kombinierbar ist.

Diese Aufgabe wird bei einer Anhängevorrichtung der eingangs beschriebenen Art erfindungsgemäß dadurch gelöst, daß der Träger mit einem Blockierelement zusammenwirkt,
welches in der Nutzstellung des Trägers ein Entnehmen des Kugelhalses aus dem Aufnahmeteil durch Formschluß blockiert und in der Aufbewahrstellung des Trägers den Kugelhals freigibt.

Der Kern der erfindungsgemäßen Lösung ist somit darin zu sehen, die Bewegung des Trägers mit der Steckdose nicht als Folge des in das Aufnahmeteil eingesetzten Kugelhalses einzusetzen, sondern dadurch, daß die Bedienungsperson aktiv auf den Träger und die Steckdose einwirkt, eine völlig neue Art der Betätigung einer Verriegelung des Kugelhalses mit seinem Verriegelungsteil in der Aufnahme zu schaffen.

Der Vorteil dieser Lösung ist darin zu sehen, daß durch den Träger ein ausreichend großer Hebelarm zur Verfügung steht, der eine komfortable und bequeme Bedienung einer Verriegelungseinrichtung zuläßt, und gleichzeitig auch noch die Möglichkeit schafft, beim Entnehmen des Kugelhalses die Steckdose zwangsläufig von der Nutzstellung in die Aufbewahrstellung zu bringen, in welcher sie optisch nicht störend angeordnet werden kann, beispielsweise außerhalb eines Sichtbereichs am Kraftfahrzeug gehalten werden kann.

Die erfindungsgemäße Lösung kann dabei zu einer alleinigen Sicherung des Verriegelungsteils des Kugelhalses in dem Aufnahmeteil führen oder zu einer weiteren Sicherung, die ergänzend zu einer üblicherweise vorgesehenen Verriegelung des Kugelhalses eingesetzt wird.

Der Vorteil dieser Lösung ist auch darin zu sehen, daß damit die Möglichkeit geschaffen wird, nicht nur den Kugelhals vom Aufnahmeteil zu lösen und somit die gesamten Vorteile eines abnehmbaren Kugelhalses zu erreichen, sondern damit auch die Möglichkeit besteht, die Steckdose in der Nutzstellung so zu positionieren, daß sie ergonomisch günstig für ein Einstecken des Steckers zur Verfügung steht, und bei Nichtbenutzung der Anhängevorrichtung die Möglichkeit geschaffen ist, die erforderliche Steckdose dann, wenn diese nicht mehr zum Anhängebetrieb benötigt wird, von der Nutzstellung in die Aufbewahrstellung zu verschwenken, in welcher sie aus dem Sichtbereich verschwindet und dadurch einerseits besser gegen Beschädigungen und/oder Verschmutzung geschützt ist und andererseits auch einen störenden optischen Eindruck vermeidet.

Zum Blockieren der Bewegung des Kugelhalses relativ zum Aufnahmeteil sind ebenfalls unterschiedlichste Lösungen denkbar. Eine vorteilhafte Lösung sieht dabei vor, daß der Kugelhals eine Ausnehmung aufweist, mit welcher das Blockierelement in Eingriff bringbar ist. Das Vorsehen einer Ausnehmung stellt dabei eines besonders einfache und kostengünstige Lösung dar.

Um dem eine Relativbewegung des Kugelhalses zum Aufnahmeteil in der Nutzstellung der Steckdose blockierenden Blockierelement die Möglichkeit zu geben, auch den Kugelhals gegen große auftretende Kräfte zu sichern, ist vorzugsweise vorgesehen, daß das Blockierelement in einer fahrzeugfesten Führung bewegbar geführt ist und gegen Krafteinwirkungen in Entnahmerichtung des Kugelhalses oder entgegengesetzt dazu abgestützt ist.

Durch die zusätzliche Abstützung des Blockierelements selbst, insbesondere außerhalb seiner beweglichen Lagerung ist die Lagerung des Blockierelements gegenüber derartigen Krafteinwirkungen entlastet und muß nicht für diese dimensioniert sein.

Besonders günstig ist es dabei, wenn die Führung zwei parallel zu einer Bewegungsrichtung des Blockierelements verlaufende Stützflächen aufweist, an welchen das Blockierelement oder der das Blockierelement tragende Träger mindestens in der Nutzstellung abstützbar ist. Diese Art von Stützflächen stellt eine sehr einfache Möglichkeit dar, eine außerhalb der bewegbaren Lagerung des Blockierelements vorgesehene zusätzliche Abstützung gegen große Kräfte zu realisieren.

Zweckmäßigerweise ist dabei vorgesehen, daß die Führungsflächen bis nahe an den Kugelhals geführt sind, so daß die Abstützung des Blockierelements oder des Trägers möglichst wirksam ist.

Insbesondere bei einer Lagerung des Trägers an dem Aufnahmeteil ist vorzugsweise vorgesehen, daß auch die Führung an dem Aufnahmeteil angeordnet ist, so daß sich die Führung mit den Stützflächen bis unmittelbar an den Kugelhals erstrecken kann.

Der Träger könnte dabei in beliebiger Art und Weise zwischen der Nutzstellung und der Aufbewahrstellung bewegbar sein. Eine Lösung wäre beispielsweise, den Träger längs einer Kulissenbahn zwischen Nutzstellung und Aufbewahrstellung zu verschieben.

Eine besonders einfache Lösung sieht vor, daß der Träger an einem Schwenklager um eine Achse schwenkbar gelagert ist. Vorzugsweise ist dabei vorgesehen, daß das Schwenklager eine ungefähr in Fahrzeuglängsrichtung verlaufende Schwenkachse aufweist, so daß der Träger im wesentlichen in einer quer zur Fahrzeuglängsrichtung verlaufenden Ebene bewegbar ist.

Prinzipiell wäre es möglich, den Träger für die Steckdose an relativ zu einer Karosserie des Fahrzeugs noch zusätzlich beweglichen Teilen anzuordnen. Aufgrund der Einfachheit ist es jedoch besonders vorteilhaft, wenn das Schwenklager für den Träger fahrzeugfest angeordnet ist.

Hinsichtlich der Lagerung des Trägers wurde bislang lediglich ausgeführt, daß der Träger vorzugsweise fahrzeugfest gelagert ist. Besonders günstig ist es jedoch, wenn der Träger an dem Aufnahmeteil beweglich gelagert ist, da damit das Aufnahmeteil nicht nur dazu eingesetzt werden kann, den Kugelhals zu tragen, sondern auch gleichzeitig den Träger für die Steckdose zu lagern.

Um sicherzustellen, daß der Träger in der jeweils gewünschten Stellung verbleibt, ist vorzugsweise vorgesehen, daß der Träger in der Nutzstellung und/oder der Aufbewahrstellung fixierbar ist. Dabei wäre es beispielsweise denkbar, den Träger so anzuordnen, daß er ohne Fixierung in einer der Stellungen steht und in der anderen fixierbar ist, dabei aber jeweils in die eine Stellung übergeht, in der anderen Stellung keine Fixierung erfolgt.

Besonders vorteilhaft ist es jedoch, wenn der Träger sowohl in der Nutzstellung als auch in der Aufbewahrstellung fixierbar ist.

Die Fixierung des Trägers kann in unterschiedlichster Art und Weise erfolgen. Beispielsweise wäre es denkbar, den Träger durch ein Steckelement in der Nutzstellung und/oder der Aufbewahrstellung festzulegen. Eine hinsichtlich der Bedienungsfreundlichkeit
besonders günstige Lösung sieht vor, daß der Träger durch eine Rasteinrichtung in der Nutzstellung und/oder der Aufbewahrstellung festlegbar ist.

Eine weitere vorteilhafte Ausführung der erfindungsgemäßen Lösung sieht vor, daß der Träger in der Nutzstellung durch eine Sicherungseinrichtung fixierbar ist.

Besonders günstig ist es dabei, wenn die Sicherungseinrichtung ein in Richtung einer den Träger fixierenden Stellung kraftbeaufschlagtes Sicherungselement aufweist.

Hinsichtlich des Zusammenwirkens zwischen Träger und Blockierelement sind die unterschiedlichsten Lösungen denkbar. Beispielsweise ist es denkbar, Träger und Blockierelement hinsichtlich ihrer Bewegungen über ein Koppelelement zu koppeln, wobei hierbei auch eine Über- oder Untersetzung des Bewegungsweges möglich ist.

Hinsichtlich des Zusammenwirkens des Trägers mit dem Blockierelement sind die unterschiedlichsten Lösungen denkbar. Eine vorteilhafte Lösung sieht vor, daß der Träger mittels eines Getriebes auf das Blockierelement wirkt. Ein derartiges Getriebe ist vorzugsweise ein solches, welches es erlaubt, das Blockierelement in der Nutzstellung mit großer Kraft in Richtung des Verriegelungsteils zu beaufschlagen.

Eine bevorzugte Ausführung eines derartigen Getriebes sieht vor, daß dieses als Keilgetriebe ausgebildet ist, wobei ein Keilgetriebe in unterschiedlichster Art und Weise aufgebaut sein kann. Eine Möglichkeit wäre die Ausbildung des Getriebes als Exzentergetriebe, eine andere Möglichkeit ist, ein Keilgetriebe dadurch zu realisieren, daß dieses eine Kulissenbahn und einen Bahnfolger umfaßt, welche relativ zueinander durch Bewegen des Trägers bewegbar sind, um das Blockierelement zwischen einer Blockierstellung und einer Freigabestellung zu bewegen.

Eine andere Möglichkeit, ein derartiges Getriebe auszubilden, wäre auch die, das Getriebe beispielsweise als Schraubengetriebe oder ähnliches krafterzeugendes Getriebe auszubilden.

Um ferner eine spielfreie Fixierung des Verriegelungsteils durch das Blockierelement zu erreichen ist vorzugsweise zwischen dem Getriebe und dem Blockierelement ein elastischer Kraftspeicher vorgesehen, welcher insbesondere in der Blockierstellung vorgespannt ist, um das Blockierelement mit der Vorspannkraft in Anlage an der im Verriegelungsteil vorgesehenen Ausnehmung zu halten.

Um andererseits beim Vorsehen eines elastischen Kraftspeichers zu verhindern, daß bei Auftreten einer auf die Kupplungskugel wirkenden Spitzenlast das Blockierelement aus der entsprechenden Ausnehmung im Kugelhals herausbewegt wird und somit der Kugelhals aus dem Aufnahmeteil lösbar wäre, ist vorzugsweise vorgesehen, daß das Blockierelement in seiner zum Entnehmen des Verriegelungsteils aus dem Aufnahmeteil blockierenden Stellung gegen eine Bewegung in Richtung einer das Verriegelungsteil freigebenden Stellung durch das Getriebe mechanisch unelastisch blockiert ist.

Mit dieser Lösung kann einerseits in vorteilhafter Weise die Spielfreiheit durch den elastischen Kraftspeicher erreicht werden, andererseits ist jedoch die Funktion des elastischen Kraftspeichers lediglich auf das Ausräumen der Spielfreiheit begrenzt und geht nicht so weit, daß diese eine Bewegung des Blockierelements in die das Verriegelungsteil freigebende Stellung blockiert. Dies wird mechanisch unelastisch durchgeführt, so daß die Nachgiebigkeit des elastischen Kraftspeichers in keinem Fall zu einem Lösen des Verriegelungsteils in dem Aufnahmeteil führen kann.

Bei einer besonders einfachen konstruktiven Lösung ist es günstig, wenn der Träger und das Blockierelement gemeinsam bewegbar sind, das heißt, daß der Träger in der Weise, in der dieser bewegt wird, auch das Blockierelement mitnimmt.

Noch einfacher ist es, wenn der Träger und das Blockierelement fest miteinander verbunden sind, so daß beispielsweise die Möglichkeit besteht, das Blockierelement unmittelbar am Träger anzuordnen und somit insbesondere auch eine Lagerung für die Bewegbarkeit des Blockierelements und eine Lagerung für die Bewegbarkeit des Trägers gemeinsam auszuführen.

Die einfachste Lösung sieht dabei vor, daß das Blockierelement einstückig an den Träger angeformt ist.

Die Bewegbarkeit des Trägers läßt sich ferner noch vorteilhaft dahingehend ausnutzen, daß der Träger nach Einsetzen des Verriegelungsteils in das Aufnahmeteil nur dann in die Nutzstellung bewegbar ist, wenn das Verriegelungsteil in dem Aufnahmeteil in der ordnungsgemäß verriegelbaren oder verriegelten Stellung sitzt. Das heißt, daß die Steckdose nur dann in die Nutzstellung überführbar ist, wenn eine ordnungsgemäße Verriegelung des Verriegelungsteils erfolgt ist.

Diese Zusatzfunktion kann durch eine zusätzliche Sperre für den Träger realisiert werden, welche die Stellung des Verriegelungsteils oder das Eingreifen des Verriegelungskörpers in die Riegelaufnahme erfaßt.

Diese Zusatzfunktion läßt sich aber auch konstruktiv dadurch besonders einfach erhalten, wenn die Ausnehmung im Verriegelungsteil für das Blockierelement nur dann zugänglich ist, wenn das Verriegelungsteil ordnungsgemäß verriegelbar oder verriegelt ist.

Eine weitere vorteilhafte Möglichkeit der Berücksichtigung der Nutzstellung und der Aufbewahrstellung der Steckdose sieht vor, daß die Steckdose in der Aufbewahrstellung unzugänglich angeordnet ist.

Beispielsweise ist dies dadurch möglich, daß an der Anhängekupplung eine Abdeckung oder ein Teil vorgesehen ist, welche die Steckdose in der Aufbewahrstellung unzugänglich macht, beispielsweise so abdeckt, daß kein Stecker in diese eingesteckt werden kann.

Eine andere vorteilhafte Möglichkeit wäre die, daß die Steckdose in der Aufbewahrstellung durch ein fahrzeugfestes Teil unzugänglich ist. Ein derartiges fahrzeugfestes Teil könnte ebenfalls eine separate, fahrzeugfest angeordnete Abdeckung sein oder auch ein karosserieseitiges Teil, beispielsweise ein Stoßfänger oder ein anderes Karosserieteil, welches ein Einstecken eines Steckers in die Steckdose verhindert.

Die Unzugänglichkeit der Steckdose in der Aufbewahrstellung hat den großen Vorteil, daß damit ein Benutzer gezwungen ist, die Steckdose von der Aufbewahrstellung in die Nutzstellung zu überführen, wenn er die Steckdose benutzen will und somit gleichzeitig auch gezwungen ist, das Verriegelungsteil in dem Aufnahmeteil zu fixieren, was zwangsläufig durch Bewegen der Steckdose von der Aufbewahrstellung in die Nutzstellung erfolgt.

Ein weiterer Vorteil der erfindungsgemäßen Lösung ist darin zu sehen, daß eine einfache Möglichkeit besteht, die Anhängekupplung in der verriegelten Stellung des Verriegelungsteils im Aufnahmeteil abschließbar zu gestalten, da beispielsweise die Stellung des Trägers durch ein Schloß fixierbar ist.

Vorzugsweise ist es denkbar, den Träger in der Nutzstellung relativ zum Aufnahmeteil zu fixieren, beispielsweise durch zwei in der Nutzstellung deckungsgleich liegende Bohrungen, durch welche ein Vorhängeschloß oder ein Einsteckschloß einführbar ist, welche ein Bewegen des Trägers relativ zum Aufnahmeteil aus der Nutzstellung heraus verhindern.

Ein weiteres vorteilhaftes Ausführungsbeispiel betrifft eine Anhängevorrichtung für Kraftfahrzeuge umfassend ein fahrzeugfestes Aufnahmeteil, einen lösbar mit dem Aufnahmeteil verbindbaren Kugelhals, eine an einem ersten Ende des Kugelhalses angeordnete Kupplungskugel, ein an einem zweiten Ende des Kugelhalses angeordnetes Verriegelungsteil, welches in eine Aufnahme des Aufnahmeteils einsetzbar und in dieser verriegelbar ist, ein in dem Verriegelungsteil angeordnetes und mittels eines Handbedienelements von einer aktiven Stellung in eine inaktive Stellung bewegbares Verschiebeelement, welches in Richtung der aktiven Stellung federbeaufschlagt ist, und einen Verriegelungskörper, welcher durch eine an dem Verschiebeelement angeordnete und mit diesem bewegbare Kurvenbahn quer zu einer Bewegungsrichtung des Verschiebeelements von einer Entriegelungsstellung in eine Verriegelungsstellung und umgekehrt bringbar ist und welcher in der Verriegelungsstellung in eine Riegelkörperaufnahme in dem Aufnahmeteil eingreift und damit das Verriegelungsteil relativ zum Aufnahmeteil verriegelt, wie sie aus dem Stand der Technik, beispielsweise der EP 0 492 035 oder der DE 196 13 428 bekannt ist.

Derartige Anhängevorrichtungen sind jedoch teuer und aufwendig herzustellen, da aufgrund der zu überwindenden Federkräfte das drehbare Handbedienelement mittels eines Zwischengetriebes, umfassend eine Zahnstange und ein in diese eingreifendes Zahnritzel, auf das Verschiebeelement wirkt.

Aus diesem Grund ist bei einer weiteren Ausführungsform der Erfindung vorgesehen, daß das Handbedienelement in einer Art und Weise bewegbar ist, welche der Art und Weise der Bewegbarkeit des Verschiebeelements entspricht.

Das heißt, daß bei einer linearen Bewegbarkeit des Verschiebeelements auch das Handbedienelement linear bewegbar ist oder bei einer drehenden Bewegbarkeit des Verschiebeelements auch das Handbedienelement drehend bewegbar ist.

Durch die Angleichung der Bewegbarkeit von Handbedienelement und Verschiebeelement wird das Zusammenwirken zwischen Handbedienelement und Verschiebeelement wesentlich vereinfacht, so daß die Anhängevorrichtung konstruktiv einfacher und damit auch kostengünstiger herstellbar ist.

Besonders zweckmäßig ist es dabei, wenn das Handbedienelement und das Verschiebeelement übersetzungsfrei zusammenwirken, das heißt, wenn keinerlei Übersetzung der Bewegung zwischen dem Handbedienelement und dem Verschiebeelement erfolgt.

Konstruktiv besonders einfach läßt sich die erfindungsgemäße Lösung dann realisieren, wenn das Handbedienelement und das Verschiebeelement längs derselben Bewegungsbahn verschiebbar sind, da damit insbesondere dieselbe Bahnführung sowohl für die Führung des Handbedienelements als auch die Führung des Verschiebeelements einsetzbar ist.

Prinzipiell wäre es möglich, das Handbedienelement und das Verschiebeelement drehbar anzuordnen, wobei allerdings hierzu ein leicht gleitend ausgeführtes Drehlager erforderlich ist und auch ein erheblicher Raumbedarf besteht.

Aus diesem Grund sieht eine besonders zweckmäßige Lösung vor, daß das Handbedienelement und das Verschiebeelement linear verschiebbar ist, da eine lineare Führung sich konstruktiv besonders einfach realisieren und auch besonders einfach montierbar gestalten läßt.

Diese Lösungen sind konstruktiv dann besonders vorteilhaft, wenn das Verschiebeelement und das Handbedienelement in Bewegungsrichtung aufeinanderfolgend, vorzugsweise fluchtend, angeordnet sind.

Das Verschiebeelement und das Handbedienelement könnten selbst dann, wenn sie sich längs derselben Bewegungsbahn bewegen, zwei Teile sein, die lediglich beim Betätigen des Handbedienelements aneinander zur Anlage kommt. Auch dies erhöht jedoch den konstruktiven Aufwand, so daß eine besonders günstige Lösung vorsieht, daß das Handbedienelement und das Verschiebeelement starr miteinander gekoppelt sind.

Beispielsweise ließe sich hierbei zwischen dem Handbedienelement und dem Verschiebeelement ein Kopplungselement vorsehen, so daß das Handbedienelement in erheblichem Abstand vom Verschiebeelement angeordnet werden könnte, um eine einfache Bedienung zu gewährleisten.

Noch einfacher realisierbar ist jedoch eine Lösung, bei welcher das Handbedienelement und das Verschiebeelement unmittelbar aufeinander wirken.

In diesem Fall lassen sich die beiden Elemente besonders einfach so ausführen, daß das Handbedienelement und das Verschiebeelement unmittelbar miteinander verbunden sind.

Eine unmittelbare Verbindung zwischen Handbedienelement und Verschiebeelement wird immer noch die Möglichkeit offen lassen, die Handbedienelement und Verschiebeelement jeweils aus einem Teil auszubilden, die miteinander verbunden sind.

Aus Gründen der Einfachheit der Herstellung und Montage ist es jedoch besonders vorteilhaft, wenn das Handbedienelement und das Verschiebeelement einstückig ausgebildet sind.

Hinsichtlich der Ausbildung des Handbedienelements wurden bislang keine näheren Angaben gemacht. So wäre es beispielsweise denkbar, das Handbedienelement so auszubilden, daß beim Bedienen desselben ein Ziehen an diesem erforderlich ist. Beispielsweise wäre dabei das Handbedienelement als Zugöse oder Zughaken auszugestalten. Eine konstruktiv noch einfachere Lösung sieht vor, daß das Handbedienelement einen Druckkopf aufweist, so daß eine Bedienung des Handbedienelements durch Drücken auf den Druckkopf erfolgt.

Hinsichtlich der Anordnung des Handbedienelements an der erfindungsgemäßen Anhängevorrichtung wurden bislang keine näheren Angaben gemacht. Dieses kann prinzipiell an jeder Stelle des Kugelhalses angeordnet sein. Vorzugsweise ist vorgesehen, daß das Handbedienelement an dem Verriegelungsteil angeordnet ist und somit sehr nahe bei dem Verriegelungselement plaziert ist, zu dessen Betätigung es dient. Dadurch läßt sich ebenfalls die konstruktive Lösung erheblich vereinfachen.

Eine Möglichkeit das Handbedienelement anzuordnen ist die, daß dieses auf einer einem Mittelstück des Kugelhalses abgewandten Seite des Verriegelungsteils liegt und somit von dieser Seite her auch zugänglich ist.

In diesem Fall ist allerdings das Aufnahmeteil so auszubilden, daß die dem Mittelstück des Kugelhalses abgewandten Seite des Verriegelungsteils zur Bedienung des Handbedienelements frei zugänglich ist.

Beispielsweise ist hierzu das Aufnahmeteil dann, wenn es das Verriegelungsteil als Ganzes umgebend aufnimmt so auszubilden, daß das Handbedienelement aus dem Aufnahmeteil herausragt, beispielsweise aus einer rückseitigen Öffnung einer Aufnahme des Aufnahmeteils.

Bei einer Anordnung des Handbedienelements auf einer einem Mittelstück des Kugelhalses abgewandten Seite des Verriegelungsteils läßt sich die Anordnung des Verschiebeelements vorzugsweise dadurch realisieren, daß dieses aus einer dem Mittelstück abgewandten Endfläche des Verriegelungsteils herausragt.

Alternativ zum Anordnen des Handbedienelements auf einer einem Mittelstück des Kugelhalses abgewandten Seite ist es aber auch denkbar, das Handbedienelement auf einer einem Mittelstück des Kugelhalses zugewandten Seite des Verriegelungsteils anzuordnen. Bei dieser Lösung wäre es beispielsweise denkbar, das Handbedienelement so anzuordnen, daß es auf einer der Kupplungskugel zugewandten Seite steht. In diesem Fall würde das Handbedienelement dann so stehen, daß es auf einer Oberseite des Kugelhalses liegt.

Alternativ dazu ist es aber auch denkbar, das Handbedienelement so anzuordnen, daß es auf einer der Kupplungskugel abgewandten Seite des Verriegelungsteils liegt, wobei dies sowohl dann möglich ist, wenn das Handbedienelement auf einer dem Mittelstück des Kugelhalses zugewandten oder abgewandten Seite des Verriegelungsteils liegt.

Hinsichtlich der Bewegungsrichtung des Handbedienelements wurden bislang ebenfalls keine näheren Angaben gemacht. So sieht ein vorteilhaftes Ausführungsbeispiel vor, daß das Handbedienelement ungefähr parallel zu einer Mittelachse des Verriegelungsteils bewegbar ist. In diesem Fall ist vorzugsweise das Handbedienelement im Bereich einer Endfläche des Verriegelungsteils angeordnet.

Erfolgt dabei die Verbindung des Verriegelungsteils mit dem Mittelstück des Kugelhalses so, daß das Verriegelungsteil zwei Endflächen aufweist, so kann dies eine der Kupplungskugel zugewandte oder der Kupplungskugel abgewandte Endfläche sein.

Ist vorzugsweise das Verriegelungsteil so ausgebildet, daß ein Endbereich des Kugelhalses ein Gehäuse desselben bildet, so weist das Verriegelungsteil vorzugsweise nur eine, und zwar der Kupplungskugel abgewandte, Endfläche auf, so daß in diesem Fall das Handbedienelement auf der der Kupplungskugel abgewandten Endfläche angeordnet ist.

Um die Möglichkeit zu schaffen, das Handbedienelement auch dann, wenn das Gehäuse des Verriegelungsteils durch den Endbereich des Kugelhalses gebildet ist, auf einer dem Mittelstück des Kugelhalses zugewandten Seite anzuordnen, ist vorzugsweise vorgesehen, daß die Bewegungsrichtung desselben schräg zu einer Mittelachse des Verriegelungsteils verläuft, so daß die Möglichkeit besteht, das Handbedienelement auf einer dem Mittelstück zugewandten Seite, entweder der Kupplungskugel zugewandt oder der Kupplungskugel abgewandt anzuordnen.

Eine schräg zur Mittelachse des Verriegelungsteils verlaufende Bewegungsrichtung ist aber auch dann realisierbar, wenn das Verriegelungsteil zwei quer zu seiner Mittelachse aufweisende Endflächen aufweist. In diesem Fall läßt sich damit die Anordnung des Handbedienelements im Bereich jeder der Endflächen noch optimieren.

Eine besonders günstige Anordnung des Handbedienelements an dem Verriegelungsteil sieht vor, daß das Handbedienelement so angeordnet ist, daß eine zum Betätigen desselben erforderliche Kraft in einer Kraftrichtung wirkt, welche eine Komponente in einer der Einführrichtung entgegengesetzten Entnahmerichtung aufweist, so daß ein Betätigen des Handbedienelements zum Lösen der Verriegelung des Verriegelungsteils im Aufnahmeteil nach Lösen der Verriegelung auch ein Verschieben des Verriegelungsteils relativ zur Aufnahme bewirkt oder zumindest unterstützt, bei welcher sich der Verriegelungskörper so weit gegen die Riegelaufnahme bewegt, daß nach Beendigung der Betätigung des Handbedienelements der Verriegelungskörper nicht mehr in die Riegelaufnahme zurückkehren und eine Verriegelung des Verriegelungsteils in dem Aufnahmeteil bewirken kann.

Besonders zweckmäßig ist ein derartiges Ausführungsbeispiel dann, wenn die Kraftrichtung in einem Winkel von weniger als 45°, noch besser weniger als 30°, oder besonders vorteilhaft ungefähr parallel zur Entnahmerichtung verläuft.

Hinsichtlich der Ausbildung der Kurvenbahn wurden im Zusammenhang mit der bisherigen Erläuterung der einzelnen Ausführungsbeispiele der erfindungsgemäßen Lösung keine näheren Angaben gemacht. So sieht ein vorteilhaftes Ausführungsbeispiel vor, daß die Kurvenbahn einen den Verriegelungskörper in der Entriegelungsstellung aufnehmenden Vertiefungsabschnitt aufweist und einen den Verriegelungskörper in der Verriegelungsstellung haltenden Druckabschnitt, wobei der Druckabschnitt die Kraft erzeugt, mit welcher der Verriegelungskörper in der Verriegelungsstellung gehalten ist.

Um den Verriegelungskörper von der Entriegelungsstellung möglichst schnell in Richtung der Verriegelungsstellung zu bewegen, ist vorzugsweise vorgesehen, daß sich an den Vertiefungsabschnitt ein in Richtung des Druckabschnitts führender Ausschiebeabschnitt anschließt, welcher gegenüber der Bewegungsrichtung eine größere Steigung aufweist als der Druckabschnitt.

Ferner ist vorzugsweise noch zwischen dem Ausschiebeabschnitt und dem Druckabschnitt ein Sicherungsabschnitt angeordnet, welcher insbesondere gegenüber der Bewegungsrichtung eine Steigung aufweist, die maximal einem Winkel entspricht, bei welchem eine Selbsthemmung auftritt.

Vorzugsweise verläuft der Sicherungsabschnitt so, daß er ungefähr parallel zur Bewegungsrichtung verläuft.

Hinsichtlich der speziellen Ausbildung des Verriegelungsteils wurden im Zusammenhang mit der bisherigen Erläuterung der einzelnen Ausführungsbeispiele keine detaillierten Angaben gemacht. So sieht ein vorteilhaftes Ausführungsbeispiel vor, daß ein Gehäuse des Verriegelungsteils durch einen Endbereich des Kugelhalses gebildet ist, so daß kein zusätzliches Gehäuse für das Verriegelungsteil notwendig ist, sondern dieses durch den Endbereich des Kugelhalses selbst gebildet ist.

Um eine günstige Zugänglichkeit für das Handbedienelement zu erhalten, ist vorzugsweise vorgesehen, daß bei in dem Aufnahmeteil eingesetztem Verriegelungsteil eine Mittelachse des Verriegelungsteils schräg oder quer zu einer Senkrechten verläuft. Besonders günstig ist es, wenn die Mittelachse des Verriegelungsteils ungefähr horizontal verläuft.

Hinsichtlich der Führung des Verschiebeelements in dem Gehäuse des Verriegelungsteils wurden bislang keine näheren Angaben gemacht. So sieht ein vorteilhaftes Ausführungsbeispiel vor, daß das Verschiebeelement um eine parallel zur Bewegungsrichtung verlaufende Achse drehfest in einer Ausnehmung des Gehäuses des Verriegelungsteils geführt ist. In diesem Fall läßt sich die Kurvenbahn besonders einfach an dem Verschiebeelement anordnen, da diese nicht mehr rotationssymmetrisch sein muß, sondern quer zur Erstreckung der Kurvenbahn in der Bewegungsrichtung geradlinig verlaufende Flächen aufweisen kann.

Das Verschiebeelement kann dabei beispielsweise durch eine Drehsicherung in dem Gehäuse geführt sein. Eine besonders einfache Realisierung der Drehsicherung sieht vor, daß das Verschiebeelement durch einen Führungsbolzen drehfest geführt ist, wobei der Führungsbolzen beispielsweise an einer Abflachung des Verschiebeelements anliegt und diese beim Verschieben des Verschiebeelements in Verschieberichtung an dem Führungsbolzen gleitet.

Ferner ist vorzugsweise an dem erfindungsgemäßen Verriegelungsteil eine Haltevorrichtung vorgesehen, mit welcher in einer Haltestellung desselben das Verschiebeelement in der inaktiven Stellung festlegbar ist und welche bei Betätigung das Verschiebeelement freigibt. Mit dieser Haltevorrichtung läßt sich das Verschiebeelement in der inaktiven Stellung festlegen, um das Verriegelungsteil ohne eine störende Einwirkung des Verriegelungselements in das Aufnahmeteil einsetzen zu können.

Vorzugsweise ist dabei das Aufnahmeteil mit einer Betätigungsfläche versehen, durch welche eine Betätigung der Halteeinrichtung erfolgt.

Vorzugsweise ist dabei die Halteeinrichtung mit einer Betätigungsnase versehen, welche an der Betätigungsfläche des Aufnahmeteils zur Anlage kommt.

Im einfachsten Fall ist die Halteeinrichtung so ausgebildet, daß sie einen Haltebolzen aufweist, welcher sich quer zur Bewegungsrichtung des Verschiebeelements erstreckt und mit welchem das Verschiebeelement in der inaktiven Stellung festlegbar ist.

Um den Haltebolzen in seiner das Verschiebeelement festlegenden Haltestellung selbsttätig halten zu können, ist vorzugsweise vorgesehen, daß der Haltebolzen in Richtung einer Haltestellung durch einen Kraftspeicher beaufschlagbar ist.

Zum Verschieben des Haltebolzens ist vorzugsweise vorgesehen, daß dieser die Betätigungsnase aufweist, welche über das Verriegelungsteil dann übersteht, wenn der Haltebolzen in seiner Haltestellung steht, während zum Bewegen des Haltebolzens aus der Haltestellung die Betätigungsnase und somit der Haltebolzen soweit verschiebbar ist, daß dieser nicht mehr über das Verriegelungsteil übersteht.

Eine besonders hinsichtlich der aufzuwendenden Teile günstige Lösung sieht dabei vor, daß der Haltebolzen gleichzeitig als Führungsbolzen für die Drehsicherung des Verschiebeelements dient.

Bei allen bislang beschriebenen Ausführungsbeispielen wurde lediglich die Lage des Handbedienelements erläutert. Da das Handbedienelement bei allen Ausführungsbeispielen in einem sehr schmutzträchtigen Bereich liegt, ist vorzugsweise vorgesehen, daß das Handbedienelement von einer deformierbaren Schutzkappe überdeckt ist.

Diese deformierbare Schutzkappe dient dabei dazu, einerseits eine Betätigung des Handbedienelements zuzulassen, andererseits das über möglichst geringe Distanz mit dem Verschiebeelement verbundene Handbedienelement gegen Schmutzeinwirkung, insbesondere im Bereich einer Führung des Handbedienelements oder eine Gehäusedurchdringung desselben zu schützen.

Die Schutzkappe kann dabei aus allen möglichen deformierbaren Materialien herstellbar sein, beispielsweise aus biegeschlaffen Materialien. Besonders günstig ist es jedoch, wenn die Schutzkappe aus einem elastischen Material hergestellt ist, welches stets nach Betätigen des Handbedienelements oder Deformieren desselben die Ausgangsform wieder einnimmt.

Die Schutzkappe kann prinzipiell auch am Verriegelungsteil angeordnet sein und einen Durchbruch des Gehäuses für das Handbedienelement umgeben.

In dem Fall, in welchem das Verriegelungsteil in einer dieses umschließenden Aufnahme im Aufnahmeteil angeordnet ist, ist vorzugsweise vorgesehen, daß die Schutzkappe an dem Aufnahmeteil angeordnet ist.

Besonders zweckmäßig ist es hierbei, wenn die Schutzkappe eine Öffnung des Aufnahmeteils, aus welcher das Handbedienelement hervorsteht, übergreift und die Öffnung umschließend an dem Aufnahmeteil anliegt, so daß in diesem Fall die Schutzkappe nicht nur das Handbedienelement gegen das Eindringen von Schmutz dann sichert, wenn das Verriegelungsteil in das Aufnahmeteil eingesetzt ist, sondern auch dann, die Aufnahme gegen ein Eindringen von Schmutz sichert, wenn das Verriegelungsteil aus der Aufnahme entfernt ist. In diesem Fall ist vorzugsweise noch zusätzlich vorgesehen, daß die Aufnahme auf der Seite, durch welche ein Einsetzen des Verriegelungsteils erfolgt, noch zusätzlich mit einem Verschlußstopfen verschließbar ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine teilweise geschnitten dargestellte Seitenansicht eines ersten Ausführungsbeispiels einer erfindungsgemäßen Anhängevorrichtung, montiert an einer Karosserie eines Kraftfahrzeugs;
- Fig. 2: einen Schnitt durch ein Aufnahmeteil der erfindungsgemäßen Anhängevorrichtung gemäß Fig. 1 längs Linie 2-2 in Fig. 3;
- Fig. 3: einen Schnitt durch das Aufnahmeteil in Fig. 2 längs Linie 3-3 in Fig. 2;
- Fig. 4: eine Draufsicht auf das Aufnahmeteil, dargestellt in Fig. 2, in Richtung des Pfeils A;
- Fig. 5: einen vergrößerten Längsschnitt ähnlich Fig. 2 bei in das Aufnahmeteil eingesetztem Verriegelungsteil, wobei das Verriegelungsteil in einer Verriegelungsstellung steht;
- Fig. 6: eine vergrößerte ausschnittsweise Darstellung des Schnitts gemäß Fig. 5 im Bereich einer Kurvenbahn und des von dieser beaufschlagten Verriegelungskörpers;
- Fig. 7: einen Schnitt ähnlich Fig. 5 bei in Entriegelungsstellung stehendem Verriegelungskörper;
- Fig. 8: einen Schnitt längs Linie 8-8 in Fig. 5;
- Fig. 9: einen Schnitt längs Linie 9-9 in Fig. 7;
- Fig. 10: eine Seitenansicht ähnlich Fig. 1 eines zweiten Ausführungsbeispiels einer erfindungsgemäßen Anhängevorrichtung mit in Nutzstellung stehender Steckdose;
- Fig. 11: einen Schnitt längs Linie 11-11 in Fig. 10 bei nicht geschnitten dargestellter Steckdose;
- Fig. 12: eine Seitenansicht des zweiten Ausführungsbeispiels der erfindungsgemäßen Anhängevorrichtung bei in Aufbewahrungsstellung stehender Steckdose;
- Fig. 13: einen Schnitt längs Linie 13-13 in Fig. 12 bei nicht geschnitten dargestellter Steckdose;
- Fig. 14: einen Schnitt längs Linie 14-14 in Fig. 11;
- Fig. 15: eine teilweise geschnittene Seitenansicht ähnlich Fig. 1 durch ein drittes Ausführungsbeispiel einer erfindungsgemäßen Anhängevorrichtung;
- Fig. 16: eine Draufsicht auf ein Aufnahmeteil des dritten Ausführungsbeispiels in Richtung des Pfeils B in Fig. 15;
- Fig. 17: einen Schnitt ähnlich Fig. 15 durch das Aufnahmeteil und gleichzeitiger Darstellung eines noch nicht in das Aufnahmeteil eingeführten Verriegelungsteils der Anhängevorrichtung gemäß dem dritten Ausführungsbeispiel;
- Fig. 18: eine Seitenansicht eines vierten Ausführungsbeispiels einer erfindungsgemäßen Anhängevorrichtung;
- Fig. 19: eine Draufsicht in Richtung des Pfeils A auf das vierte Ausführungsbeispiel der erfindungsgemäßen Anhängevorrichtung, teilweise im Schnitt dargestellt, bei in Nutzstellung stehendem Träger mit Steckdose;
- Fig. 20: eine Draufsicht ähnlich Fig. 19 bei in Aufbewahrungsstellung stehendem Träger mit Steckdose;
- Fig. 21: eine Ansicht in Richtung des Pfeils B in Fig. 18 bei in Nutzstellung stehendem Träger mit Steckdose;
- Fig. 22: eine Draufsicht in Richtung des Pfeils B in Fig. 18 bei in Aufbewahrungsstellung stehendem Träger mit Steckdose und
- Fig. 23: einen ausschnittsweisen Schnitt längs Linie 23-23 in Fig. 19 durch eine Lagerung eines Fixierbolzens im Aufnahmeteil und den Fixierbolzen ohne Darstellung des Trägers.

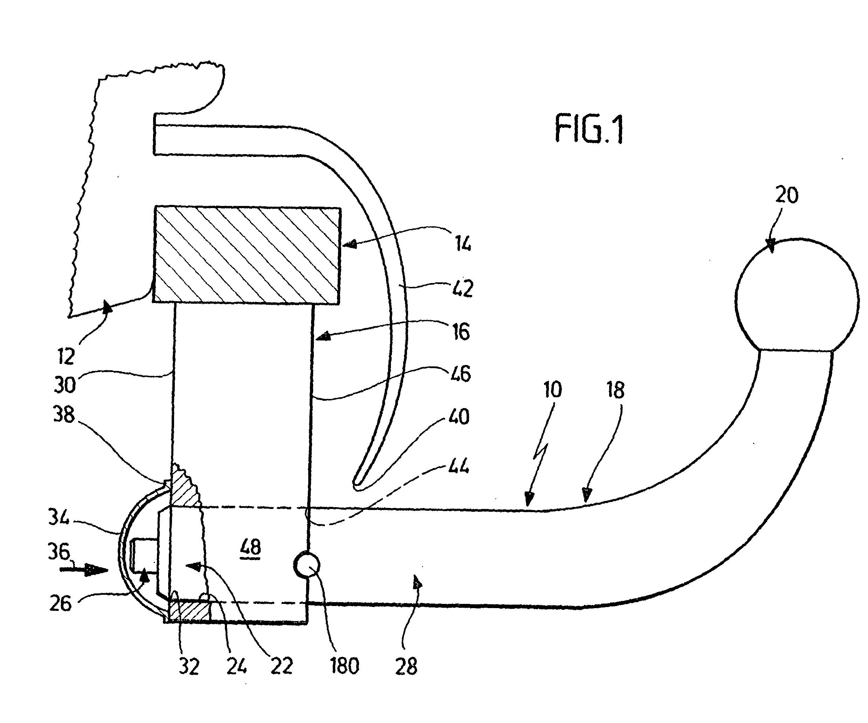

Ein in Fig. 1 dargestelltes erstes Ausführungsbeispiel einer als Ganzes mit 10 bezeichneten Anhängevorrichtung für Kraftfahrzeuge, umfaßt ein an einer Karosserie 12 eines Kraftfahrzeugs beispielsweise mittels eines Querträgers 14 gehaltenes Aufnahmeteil 16, mit welchem lösbar ein als Ganzes mit 18 bezeichneter Kugelhals verbindbar ist, welcher an einem Ende eine Kupplungskugel 20 trägt und an einem anderen Ende ein als Ganzes mit 22 bezeichnetes Verriegelungsteil, welches in eine als Ganzes mit 24 bezeichnete Aufnahme, beispielsweise ausgeführt als Durchbruch des Aufnahmeteils 16, einsetzbar ist, wobei das Verriegelungsteil 22 in noch zu beschreibender Weise mit dem Aufnahmeteil 16 verriegelbar ist.

Das Verriegelungsteil 22 ist dabei mit einem Handbedienelement 26 versehen, welches auf einer einem sich zwischen dem Verriegelungsteil 22 und der Kupplungskugel 20 erstreckenden Mittelstück 28 des Kugelhalses 18 abgewandten Seite angeordnet ist und über eine Rückseite 30 des Aufnahmeteils 16 übersteht.

Zum Schutz des Handbedienelements 26 ist vorzugsweise an dem Aufnahmeteil 16 eine der Rückseite 30 zugewandte hintere Öffnung 32 der Aufnahme 24 von einer Schutzkappe 34 überdeckt, und zwar so, daß unter der Schutzkappe 34 auch das Handbedienelement 26 liegt. Durch die Ausbildung der Schutzkappe 34 aus deformierbarem und elastischem Material besteht die Möglichkeit, durch Beaufschlagung der Schutzkappe 34 auch das Handbedienelement 26 in einer Bedienrichtung 36 zu beaufschlagen, um die Verriegelung zwischen dem Verriegelungsteil 22 und dem Aufnahmeteil 16 zu lösen, wie nachfolgend im einzelnen beschrieben ist.

Die Schutzkappe 34 ist vorzugsweise mit einem Haltering 38 an der Rückseite 36 des Aufnahmeteils 16 gehalten, wobei der Haltering 38 vorzugsweise die Schutzkappe 34 die hintere Öffnung 32 umschließend an der Rückseite 30 anlegt.

Das Aufnahmeteil 16 ist ferner, wie in Fig. 1 dargestellt, so angeordnet, daß die Aufnahme 24 soweit unterhalb einer Unterkante 40 eines Stoßfängers 42 liegt, daß der Kugelhals 18 mit dem Verriegelungsteil 22 durch eine vordere Öffnung 44 der Aufnahme 24 in diese einführbar ist. Dabei übergreift der Stoßfänger 42 eine Vorderseite 46 des Aufnahmeteils 16, so daß dieses bis auf einen die Aufnahme 24 tragenden unteren Abschnitt 48 durch den Stoßfänger 42 überdeckt ist, welcher auch beispielsweise den Querträger 14 übergreift.

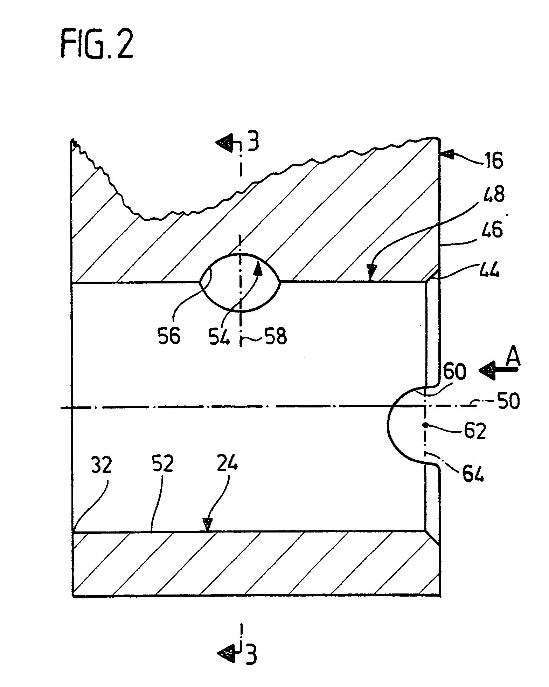

Wie in Fig. 2 dargestellt, ist die Aufnahme 24 beispielsweise als zu einer Achse 50 kreiszylindrische Bohrung ausgeführt, welche sich von der vorderen Öffnung 44 bis zur hinteren Öffnung 32 durch den unteren Abschnitt 48 des Aufnahmeteils 16 erstreckt und dabei eine kreiszylindrische Führungsfläche 52 bildet, die ebenfalls von der vorderen Öffnung 44 zur hinteren Öffnung 32 verläuft.

Vorzugsweise verläuft dabei die Achse 50 ungefähr in horizontaler Richtung.

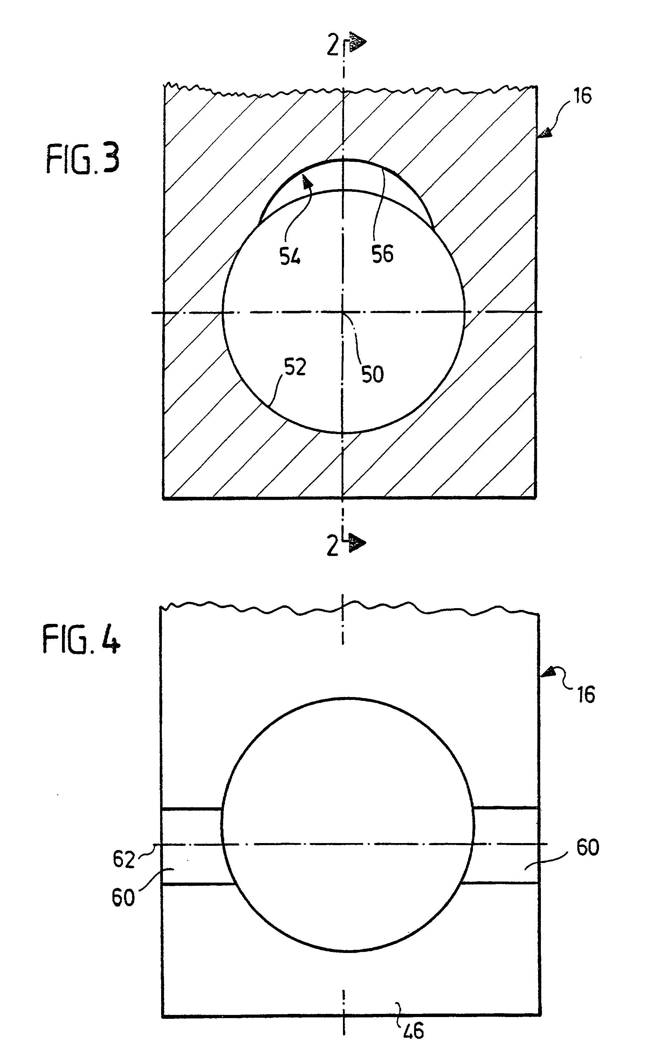

Um das Verriegelungsteil 22 in der Aufnahme 24 verriegeln zu können, weist diese noch in Abweichung von der Führungsfläche 52 eine zusätzliche, kalottenähnliche Tasche 54 auf, welche in einem mittigen Bereich zwischen der vorderen Öffnung 44 und der hinteren Öffnung 32 liegt und sich in radialer Richtung zur Achse 50 erstreckt, wobei die Tasche eine kalottenähnliche Wandfläche 56 aufweist, die in Richtung der Achse 50 gesehen, symmetrisch zu einer senkrecht auf der Achse 50 stehenden Mittelebene 58 konvex gewölbt ausgebildet ist und bezüglich der Mittelebene 58 als Schnittebene sowie hierzu parallelen Ebenen einen sichelförmigen Querschnitt aufweist, welcher sich radial außenliegend an die kreiszylindrische Führungsfläche 52 anschließt, wie in Fig. 3 dargestellt.

Zur Bildung einer Positioniersicherung für den Kugelhals 18 schließen sich an die Führungsfläche 52 im Bereich der vorderen Öffnung 44 beiderseits der Aufnahme 24 beispielsweise halbkreisförmige Vertiefungen 60 an, die in der Vorderseite 46 als zu einer Zylinderachse 62 halbzylindrisch ausgebildete Vertiefungen 60 ausgebildet sind, wobei sich die Zylinderachse 62 quer zur Achse 50 erstreckt, jedoch gegenüber dieser versetzt in einer sich senkrecht zur Achse 50 erstreckenden Ebene 64 verläuft.

Vorzugsweise ist der Versatz der Zylinderachse 62 gegenüber der Achse 50 so gewählt, daß die Zylinderachse 62 auf einer der Tasche 54 gegenüberliegenden Seite der Achse 50 liegt, wie in Fig. 3 und Fig. 4 dargestellt.

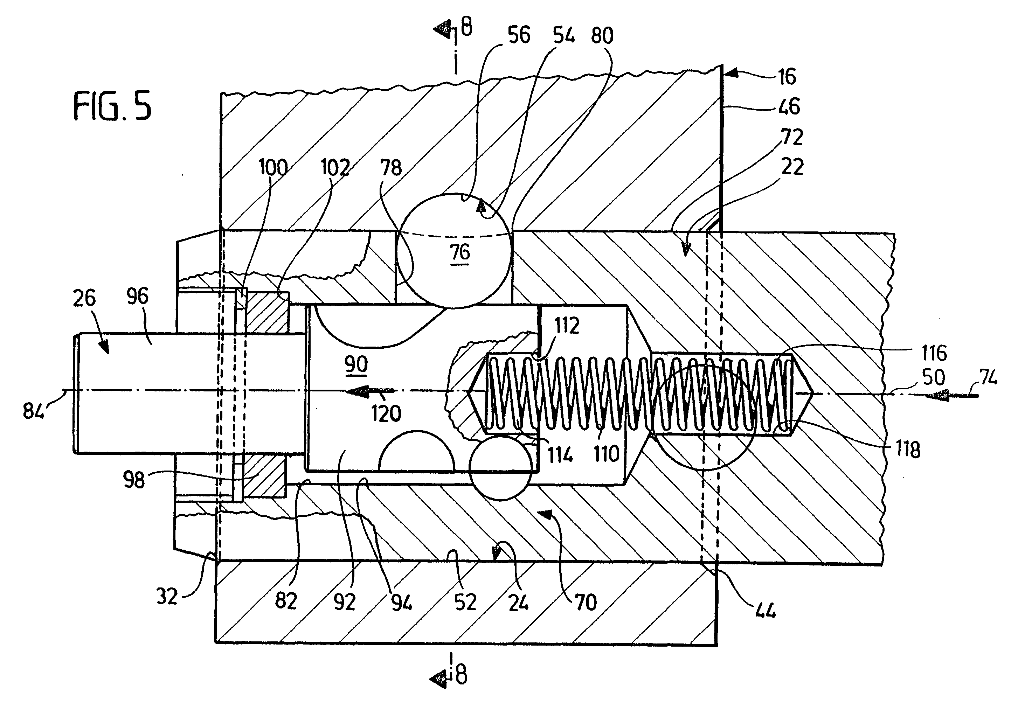

Das erfindungsgemäße Verriegelungsteil 22 umfaßt, wie in Fig. 5 dargestellt, ein als Ganzes mit 70 bezeichnetes Gehäuse, welches durch einen Endabschnitt des Kugelhalses 18 gebildet ist und eine zur Achse 50 als Längsmittelachse zylindrische Außenmantelfläche 72 aufweist, welche in die Führungsfläche 52 in einer Einführrichtung 74 einführbar ist, wobei die Führungsfläche 52 das Gehäuse 70 über die Außenmantelfläche 72 in Richtung quer zur Achse 50 führt und positioniert.

Zur Fixierung des Verriegelungsteils 22 ist dieses mit einem als Kugel 76 ausgebildeten Verriegelungskörper versehen, welcher in einer Kugelführung 78 sitzt, die sich in radialer Richtung zur Längsmittelachse 50 von einer in der Außenmantelfläche 72 liegenden Kugelöffnung 80 in das Gehäuse 70 hineinerstreckt, und zwar bis zu einer Lagerausnehmung 82, welche im einfachsten Fall als Bohrung ausgeführt ist und sich mit ihrer Längsachse 84 koaxial zur Längsmittelachse 50 erstreckt.

In der Lagerausnehmung 82 ist ein als Ganzes mit 90 bezeichnetes Verschiebeelement geführt, welches im einfachsten Fall eine in wesentlichen Abschnitten kreiszylindrische Außenfläche 92 aufweist, die an Innenwänden 94 der Lagerausnehmung 82 geführt anliegt und somit in Richtung der Längsachse 84 beweglich in der Lagerausnehmung 82 geführt ist.

An dem Verschiebeelement 90 einstückig angeformt ist ein Zylinderkörper 96, welcher sich in Einführrichtung 74 von dem Verschiebeelement 90 weg durch die Aufnahme 24 und deren hintere Öffnung 32 hindurch erstreckt und mit einem Kopf das über die Rückseite 30 überstehende Handbedienelement 26 bildet.

Der Zylinderkörper 96 durchsetzt dabei einen den Zylinderkörper 96 umschließenden und die Lagerausnehmung 82 zur Rückseite 30 hin abschließenden Verschlußring 98, welcher gegen ein Hineingleiten in die Lagerausnehmung 82 mittels einer in dieser ausgeführten Stufe 102 gesichert ist und gegen ein Herausgleiten aus der Lagerausnehmung 82 mittels eines Federrings 100.

Ferner ist das Verschiebeelement 90 mittels einer Druckfeder 110 beaufschlagt, welche auf einer dem Zylinderkörper 96 gegenüberliegenden Seite des Verschiebeelements 90 angeordnet ist und sich ungefähr koaxial zur Längsachse 84 der Lagerausnehmung 82 erstreckt. Die Druckfeder 110 ist dabei einerseits am Verschiebeelement 90 dadurch quer zur Längsachse 84 festgelegt, daß sie sich in eine Bohrung 112 im Verschiebeelement 90 mit einem Ende 114 hineinerstreckt und mit einem gegenüberliegenden Ende 116 in einer in Fortsetzung der Lagerausnehmung 82 mit kleinerem Radius ausgeführten Sacklochbohrung 118 liegt.

Die Druckfeder 110 wirkt somit auf das Verschiebeelement 90 mit einer Kraft 120, welche in Richtung des Handbedienelements 26 gerichtet ist, so daß dieses stets aufgrund der Wirkung der Druckfeder 110 mit der maximal möglichen Länge aus der Lagerausnehmung 82 herausragt.

Die Druckfeder 110 erzeugt erfindungsgemäß eine Spannkraft im Bereich von maximal 70N, vorzugsweise in der Größenordnung von maximal 50N, welcher noch manuell entgegengewirkt werden kann.

Diese Spannkraft bezieht sich auf die Stellung des Verschiebeelements 90, in welcher die Kugel 76 in den Vertiefungsabschnitt 132 eintaucht. Ausgehend von dieser Stellung nimmt die Spannkraft bei weiterer Verschiebung des Verschiebeelements ab.

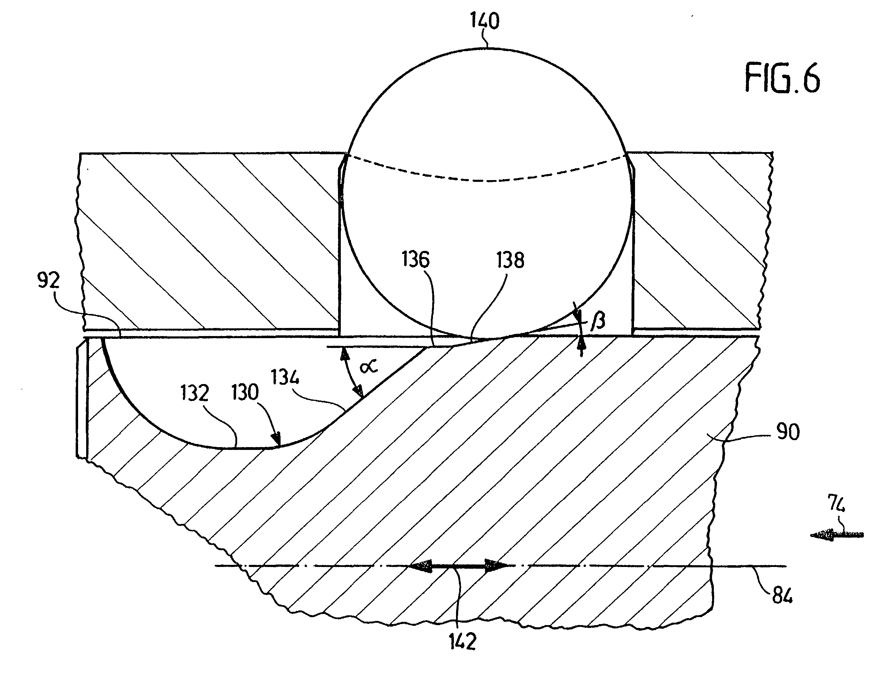

Das Verschiebeelement 90 ist, wie in Fig. 5 und 6 dargestellt, mit einer als Ganzes mit 130 bezeichneten Kurvenbahn versehen, wobei die Kurvenbahn 130 einen Vertiefungsabschnitt 132 bildet, welcher gegenüber der Außenfläche 92 des Verschiebeelements 90 als sich in Richtung der Längsachse 84 erstreckende Vertiefung ausgebildet ist. An diesen Vertiefungsabschnitt 132 schließt sich ein gegenüber der Längsachse 84 mit einen Winkel α schräg verlaufender Ausschiebeabschnitt 134 an und auf diesen folgt ein Sicherungsabschnitt 136, welcher vorzugsweise parallel zur Längsachse 84 verläuft. An diesen Sicherungsabschnitt 136 schließt sich dann als letzter Abschnitt ein Druckabschnitt 138 an, welcher letztlich in Höhe der Außenfläche 92 des Verschiebeelements 90 endet.

Der Druckabschnitt 138 ist gegenüber der Längsachse 84 um einen Winkel β geneigt, welcher wesentlich kleiner ist als der Winkel α.

Der Winkel β beträgt vorzugsweise maximal ungefähr 15° und der Winkel α vorzugsweise maximal ungefähr 50°.

Die gesamte Kurvenbahn 130 weist dabei quer zu ihrem Verlauf in Richtung der Längsachse 84 beispielsweise ebene Flächen auf und ist somit beispielsweise durch eine Fräsbearbeitung des im wesentlichen eine kreiszylindrische Außenfläche 92 aufweisenden Verschiebeelements 90 herstellbar.

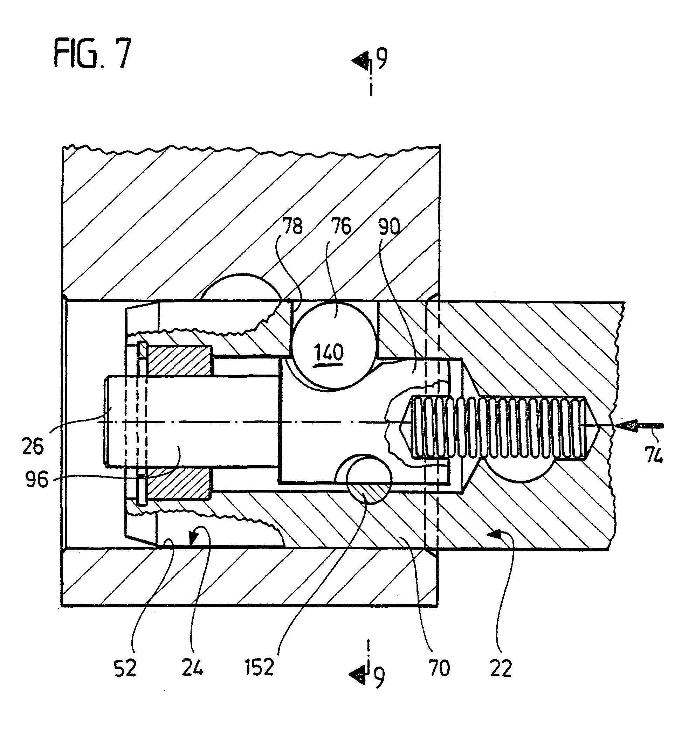

Ferner ist der Vertiefungsabschnitt 132 der Kurvenbahn 130 gegenüber der Außenfläche 92 soweit vertieft ausgebildet, daß die Kugel 76, wie in Fig. 7 dargestellt, die Möglichkeit hat, sich bei mit der Kugelführung 78 im wesentlich fluchtend angeordnetem Vertiefungsabschnitt 132 sich soweit in Richtung der Längsachse 84 zu bewegen, daß eine in maximaler Entfernung von der Längsachse 84 liegende Kugelkappe 140 noch innerhalb der Außenmantelfläche 72 des Gehäuses 70 liegt, so daß das Gehäuse 70 ungestört durch die Kugel 76 in Einführrichtung 74 bewegbar ist.

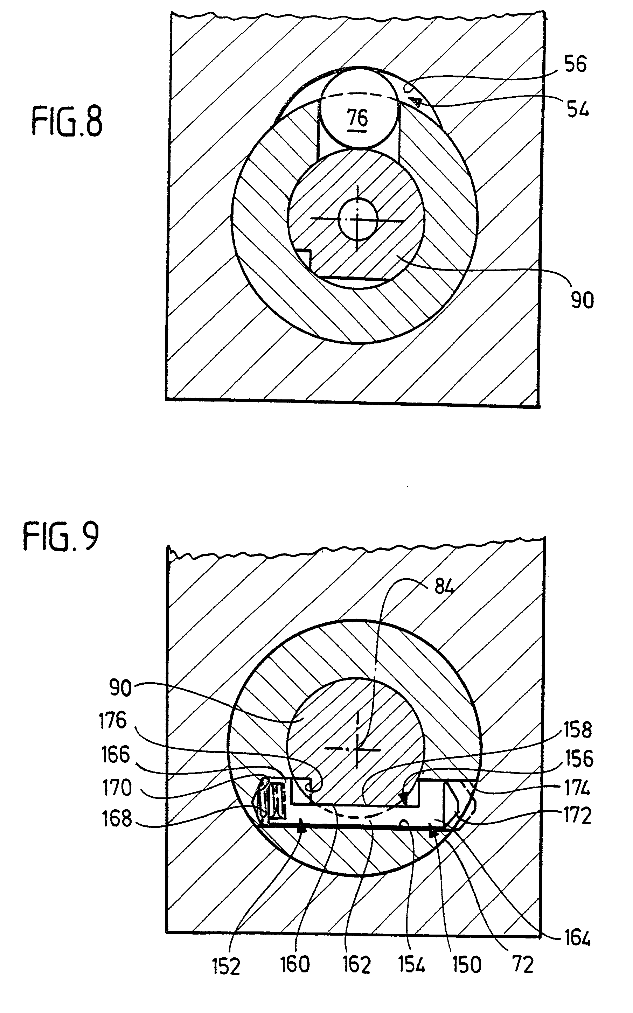

Ferner ist der Verlauf des Ausschiebeabschnitts 134 (Fig. 6) bis zum Sicherungsabschnitt 136 so gewählt, daß bei auf dem Sicherungsabschnitt 136 aufsitzender Kugel die den maximalen Abstand von der Längsachse 84 aufweisende Kugelkappe 140 weitgehend in der Tasche 54 sitzt, jedoch zwischen der Kugelkappe 140 und der Wandfläche 56 der Tasche 54 noch ein geringes Spiel besteht (Fig. 8). Erst dann, wenn die Kugel 76 ausschließlich auf dem Druckabschnitt 138 anliegt und durch diesen in Richtung der Tasche 54 beaufschlagt ist, liegt die Kugelkappe 140 spielfrei an der Wand 56 der Tasche 54 an, so daß in diesem Fall eine spielfreie Fixierung des Verriegelungsteils 22 in dem Aufnahmeteil 16 vorliegt.

Die Stellung, in welcher die Kugel 76 durch den Druckabschnitt 138 beaufschlagt ist, wird als Verriegelungsstellung bezeichnet, während die Stellung, in welcher die Kugel 76 in dem Vertiefungsabschnitt 132 liegt als Entriegelungsstellung bezeichnet ist.

Um von der Entriegelungsstellung in die Verriegelungsstellung und umgekehrt übergehen zu können, ist das Verschiebeelement 90 in einer parallel zur Längsachse 84 verlaufenden Verschieberichtung 142 im einfachsten Fall linear verschiebbar, wobei die Stellung des Verschiebeelements 90, in welcher die Kugel 76 in der Verriegelungsstellung steht, als aktive Stellung bezeichnet ist und in Fig. 6 dargestellt ist, während die Stellung, in welcher die Kugel 76 in dem Vertiefungsabschnitt 132 liegt und in ihrer Entriegelungsstellung steht als inaktive Stellung bezeichnet ist. Eine mögliche inaktive Stellung ist in Fig. 7 dargestellt.

Um die Möglichkeit zu haben, das Verschiebeelement 90 in der inaktiven Stellung dauerhaft festzulegen, ist, wie in Fig. 9 dargestellt, eine als Ganzes mit 150 bezeichnete Halteeinrichtung vorgesehen, welche einen Haltebolzen 152 umfaßt, der seinerseits in einer das Gehäuse 70 quer zur Längsachse 84 durchsetzenden Querbohrung 154 angeordnet ist und einen mittigen Ausschnitt 156 aufweist, welcher dem Verschiebeelement 90 zugewandt angeordnet ist. Der Ausschnitt 156 weist seinerseits insbesondere eine Flachseite 158 auf, welche an einer Abflachung 160 der Außenfläche 92 des Verschiebeelements 90 anliegt und somit eine Verdrehsicherung sowohl für das Verschiebeelement 90 als auch für den Haltebolzen 152 bildet. Vorzugsweise liegt der Haltebolzen 152 im Bereich der Flachseite 158 auf einer dem Verschiebeelement 90 gegenüberliegenden Seite der Flachseite 158 mit einem halbzylindrischen Abschnitt 162 in der Querbohrung 154.

Beiderseits des halbzylindrischen Abschnitts 162 weist der Haltebolzen 152 einen vorderen zylindrischen Abschnitt 164 und einen hinteren zylindrischen Abschnitt 166 auf.

Der hintere zylindrische Abschnitt 166 ist mittels einer Druckfeder 168 beaufschlagt, die sich an einem Abschlußboden 170 der sacklochartig ausgeführten Querbohrung 154 abstützt und somit den hinteren zylindrischen Abschnitt 166 stets in Richtung des Verschiebeelements 90 beaufschlagt.

Der vordere zylindrische Abschnitt 164 weist seinerseits eine Betätigungsnase 172 auf, welche die Möglichkeit hat, aus einer vorderen Öffnung 174 der Querbohrung 154 herauszuragen, wie in Fig. 9 gestrichelt angedeutet. In diesem Fall steht die Betätigungsnase 172 jedoch über die Außenmantelfläche 72 des Gehäuses 70 über, so daß diese Stellung des Haltebolzens 152 nur dann möglich ist, wenn das Gehäuse 70 die Aufnahme 24 verlassen hat.

Sobald das Gehäuse 70 in der Aufnahme 24 sitzt, liegt die Betätigungsnase 172 an der Führungsfläche 52 der Aufnahme 24 an und hält den Haltebolzen 152 gegen die Wirkung der Feder 168 in einer Freigabestellung, in welcher sich das Verschiebeelement 90 ungehindert durch den Haltebolzen 152 in der Verschieberichtung 142 parallel zur Längsachse 84 bewegen kann.

Zur Festlegung des Verschiebeelements 90 ist dieses mit einer Aussparung 176 versehen, welche sich als halbkreisförmige Vertiefung in die Außenfläche 92 des Verschiebeelements 90 hineinerstreckt und derart angeordnet ist, daß die Aussparung 176 dem hinteren zylindrischen Abschnitt 166 dann zugewandt ist, wenn das Verschiebeelement 90 in einer inaktiven Stellung steht, in welcher die Kugel 76 in dem Vertiefungsabschnitt 132 liegt, ohne daß die Kugel 76 an dem Ausschiebeabschnitt 134 anliegt.

Wird in dieser Stellung - und dies ist nur bei außerhalb der Aufnahme 24 befindlichem Verriegelungsteil 22 möglich - dem Haltebolzen 152 die Möglichkeit gegeben, in die Haltestellung überzugehen, so greift der hintere zylindrische Abschnitt 166 des Haltebolzens 152 in die Aussparung 176 ein und sichert das Verschiebeelement 90 gegen eine Bewegung von der inaktiven Stellung in die aktive Stellung. Der Haltebolzen 152 wird dabei durch die Feder 168 in seiner Haltestellung gehalten.

Wird das Verriegelungsteil 22 mit in Haltestellung stehendem Haltebolzen 152 und somit in inaktiver Stellung stehendem Verschiebeelement 90 in die Aufnahme 24 eingeführt, so ist dies ungehindert durch die Kugel 76 möglich, da diese in ihrer Entriegelungsstellung aufgrund ihres Eingreifens in den Vertiefungsabschnitt 132 steht. Sobald jedoch die Betätigungsnase 172 an der Führungsfläche 52 zur Anlage kommt und von dieser beaufschlagt wird, wird der Haltebolzen 152 entgegen der Kraft der Feder 168 in die Freigabestellung verschoben, so daß der hintere zylindrische Abschnitt 166 desselben die Aussparung 176 verläßt und das Verschiebeelement 90 wieder ungehindert durch den Haltebolzen 152 bewegbar ist. Diese Stellung ist in Fig. 7 dargestellt.

In dieser Stellung kann jedoch das Verschiebeelement 90 nicht in die aktive Stellung übergehen, da die Kugel 76 an einem Übergang von der Entriegelungsstellung in die Verriegelungsstellung durch die Führungsfläche 52 gehindert ist. Das Verschiebeelement 90 verschiebt sich jedoch soweit, daß bereits der Ausschiebeabschnitt 134 mit seinem sich unmittelbar dem Vertiefungsabschnitt 132 anschließenden Bereich an der Kugel 76 anliegt und diese in Richtung der Führungsfläche 52 beaufschlagt.

Sobald das Verriegelungsteil 22 in der Einschieberichtung 74 soweit in die Aufnahme 24 eingeschoben ist, daß die Kugel 76 in die Tasche 54 eintauchen kann, verschiebt der Ausschiebeabschnitt 134 der Kurvenbahn 130 die Kugel 76 in Richtung der Tasche 54, wobei gleichzeitig das Verschiebeelement 90 in die aktive Stellung übergeht. Es erfolgt zunächst ein Verschieben der Kugel so weit, bis diese auf dem Sicherungsabschnitt 136 ruht und dann weiter so lange, bis die Kugel 76 voll an der Wandfläche 56 der Tasche 54 anliegt und dabei auf dem Druckabschnitt 138 ruht. Damit liegt die Kugel 76 spielfrei in der Tasche 54 und das Verschiebeelement 90 steht in seiner aktiven Stellung.

Dadurch, daß der Druckabschnitt 138 eine geringe Steigung aufweist, wird trotz relativ geringer Spannkraft der Druckfeder 110, die maximal ungefähr 50N, noch besser 40N, beträgt, die Kugel 76 mit einer großen Kraft in Richtung der Tasche 54 beaufschlagt und an der Wandfläche 56 derselben in Anlage gehalten.

Durch die geringe Neigung des Druckabschnitts 138 führen übliche, beim Anhängerbetrieb auf die Kupplungskugel 20 wirkende Kräfte nicht dazu, daß die Kugel 76 den Druckabschnitt 138 verläßt. Sollten jedoch Spitzenlasten auftreten, so hat die Kugel 76 maximal die Chance, aufgrund des schrägen Verlaufs des Druckabschnitts 138 das Verschiebeelement 90 geringfügig aus der aktiven Stellung heraus in Richtung der inaktiven Stellung zu verschieben, jedoch nur so lange, bis die Kugel 76 auf dem Sicherungsabschnitt 136 ruht. Da der Sicherungsabschnitt 136 parallel zur Verschieberichtung 142 des Verschiebeelements 90 verläuft, bewirken selbst große auf die Kugel 76 wirkende Kräfte in Richtung der Längsachse 84 keine weitere Verschiebung des Verschiebeelements 90 in Richtung der inaktiven Stellung, so daß nach wie vor das Verriegelungsteil 22 in dem Aufnahmeteil 16 verriegelt bleibt, da die Kugel 76 nach wie vor weitgehend in die Tasche 54 eingreift.

Zur exakten Festlegung der Verriegelungsstellung der Kugel 76 und deren spielfreier Positionierung in der Tasche 54 wird eine exakte Festlegung der Lage des Verriegelungsteils 22 in der Aufnahme 24 durch einen Positionierbolzen 180 erreicht, welcher das Verriegelungsteil 22 durchsetzt, seitlich über die Außenmantelfläche 72 desselben übersteht und in der Verriegelungsstellung der Kugel 76 in die Vertiefungen 60 eingreift und in diesen spielfrei anliegt, so daß das spielfreie Anliegen des Positionierbolzens 180 in den Vertiefungen 60 und die spielfreie Positionierung der Kugel 76 in der Tasche 54 in der Verriegelungsstellung insgesamt den Kugelhals 18 spielfrei in dem Aufnahmeteil 16 fixieren.

Zum Lösen des Verriegelungsteils 22 in dem Aufnahmeteil 16 ist das Handbedienelement 26 in der Bedienungsrichtung 36 zu beaufschlagen, wodurch gegen die Wirkung der Druckfeder 110 das Verschiebeelement 90 die aktive Stellung verläßt und in die inaktive Stellung übergeht, so daß die Kugel 76 die Möglichkeit hat, ebenfalls von der Verriegelungsstellung in die Entriegelungsstellung überzugehen. Da die Bedienungsrichtung 36 entgegengesetzt zur Einführrichtung 74 gerichtet ist, erfolgt zugleich mit dem Übergang der Kugel 76 in die Entriegelungsstellung ein Verschieben des gesamten Verriegelungsteils 22 entgegengesetzt zur Einführrichtung 74 und somit ein Verschieben desselben auch so weit, daß die Kugel 76 nicht mehr in die Tasche 54 eingreifen kann, sondern an den Führungsflächen 52 anliegt, wie in Fig. 7 dargestellt. In dieser Stellung kann der Kugelhals 18 dann aus der Aufnahme 24 entgegengesetzt zur Einführrichtung 74 herausgezogen werden.

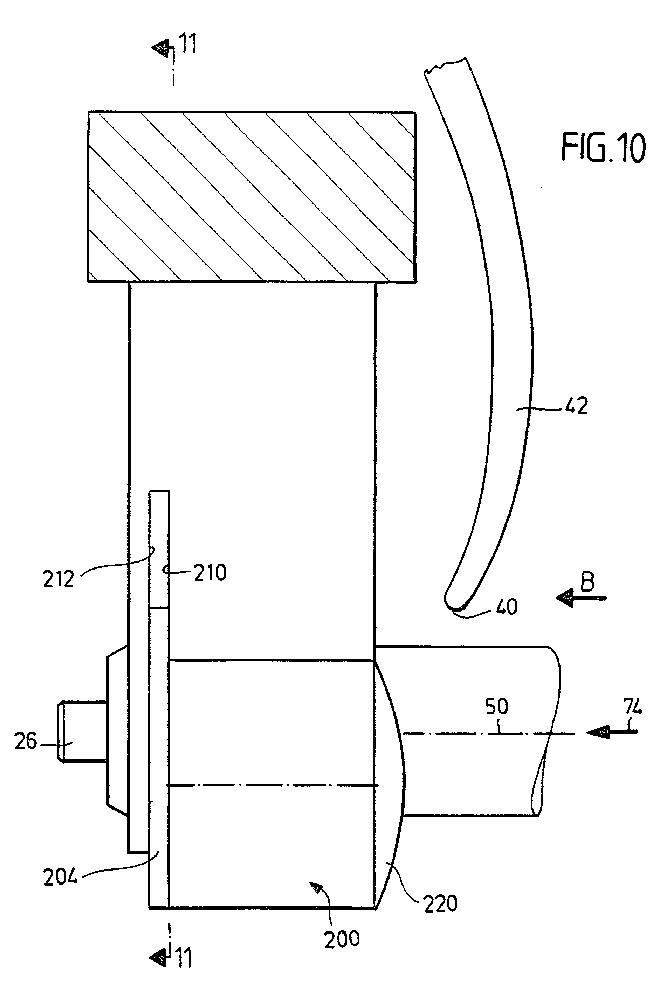

Bei einem zweiten Ausführungsbeispiel der erfindungsgemäßen Anhängevorrichtung, dargestellt in den Fig. 10 bis 14, sind diejenigen Teile, die mit denen des ersten Ausführungsbeispiels identisch sind, mit denselben Bezugszeichen versehen.

Insbesondere erfolgt bei dem zweiten Ausführungsbeispiel die Fixierung des Verriegelungsteils 22 in dem Aufnahmeteil 16 in gleicher Weise wie beim ersten Ausführungsbeispiel, so daß auf die Ausführungen hierzu vollinhaltlich Bezug genommen wird.

Im Gegensatz zum ersten Ausführungsbeispiel ist bei dem zweiten Ausführungsbeispiel eine als Ganzes mit 200 bezeichnete Steckdose vorgesehen, welche wie bei Anhängevorrichtungen üblich, dazu dient, einen Stecker aufzunehmen, welcher mit einem Anhängerstromkreis verbunden ist, so daß beim Einstecken des Steckers in die Steckdose 200 ein Stromkreis des Zugfahrzeugs mit dem des Anhängers verbindbar ist.

Die Steckdose 200 ist dabei, wie in Fig. 10 bis 13 dargestellt, an einem als Ganzes mit 202 bezeichneten Träger gehalten, welches beispielsweise als Trägerblech oder Trägerplatte ausgebildet ist.

Der Träger 202 bildet einerseits eine Halteplatte 204, auf welcher die Steckdose 200 unmittelbar sitzt und von dieser Halteplatte 204 ausgehend einen Trägerarm 206, welcher sich in Richtung des Aufnahmeteils 16 erstreckt und in eine seitlich desselben vorgesehene schlitzförmige Aussparung 208 im Aufnahmeteil 16. Die Aussparung 208 liegt dabei parallel zu Ebenen, die senkrecht auf der Achse 50 stehen, und erstreckt sich mit einer senkrecht auf der Achse 50 stehenden vorderen Wandfläche 210 und einer zu dieser parallelen hinteren Wandfläche 212 soweit in das Aufnahmeteil 16 hinein, bis die Aussparung 208 die Führungsfläche 52 der Aufnahme 24 durchschneidet.

Ein sich in die Aussparung 208 hineinerstreckender Abschnitt 214 des Trägerarms 206 ist um eine Achse 216 drehbar, welche beispielsweise durch einen die Aussparung 208 und den Abschnitt 214 des Trägerarms 206 durchsetzenden Bolzen definiert ist, wobei der Bolzen in dem Aufnahmeteil 16 seitlich der Aussparung 208 verankert ist.

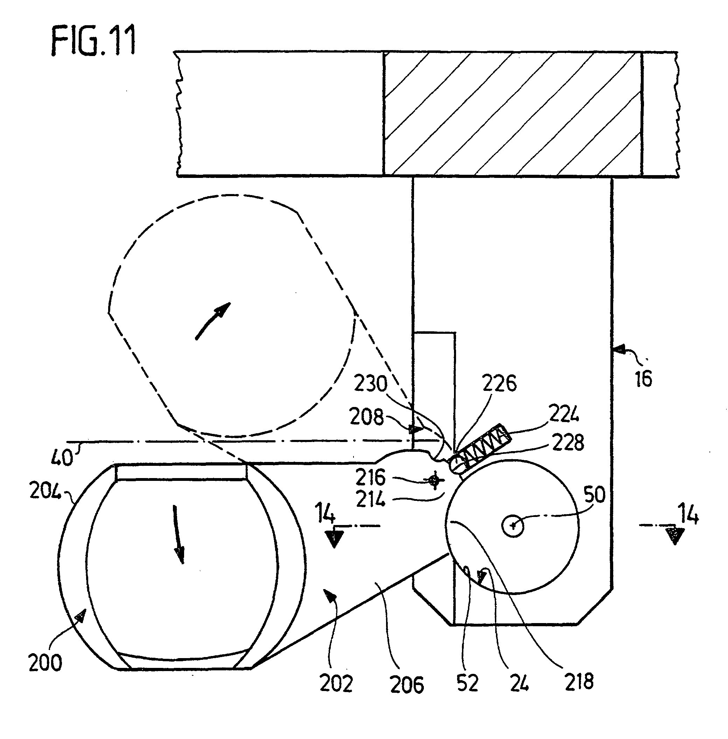

Ferner ist an den Trägerarm 206 eine Blockierzunge 218 angeformt, welche dann in die Aufnahme 24 hineinragt, wenn der Träger 202 in einer in Fig. 10 und 11 dargestellten Nutzstellung steht, in welcher die Steckdose 200 unterhalb der Unterkante 40 des Stoßfängers 42 steht und somit zum Einstecken der Steckers leicht zugänglich ist, wobei hierzu ein Öffnen eines Deckels 220 der Steckdose in bekannter Weise erforderlich ist.

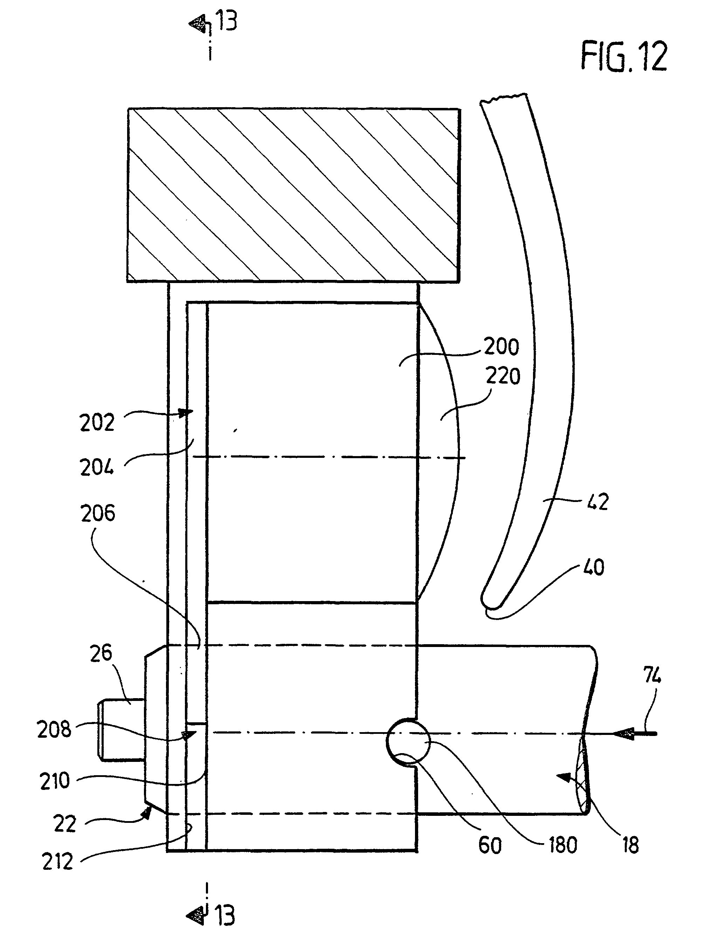

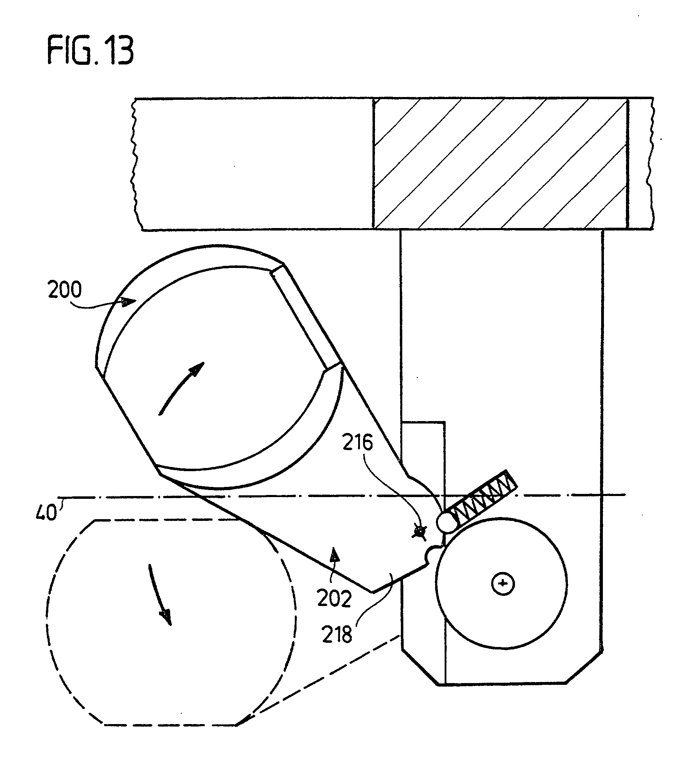

Der Träger 202 ist aber auch ausgehend von der in Fig. 10 und 11 dargestellten Nutzstellung in eine in Fig. 12 und 13 dargestellte Aufbewahrstellung bringbar, in welcher die Steckdose 200 oberhalb der Unterkante 40 des Stoßfängers 42 und somit außerhalb eines Sichtbereichs eines Benutzers des Fahrzeugs steht. In diesem Fall ist die Steckdose 200 auch nicht zugänglich, so daß auch der Stecker in dieser Aufbewahrstellung nicht in die Steckdose 200 einsteckbar ist.

In der Aufbewahrstellung ist der Träger 202 soweit verschwenkt, daß die Blockierzunge 218 aus der Aufnahme 24 heraus bewegt ist und somit die Aufnahme 24 zum Einführen des Verriegelungsteils 22 frei ist.

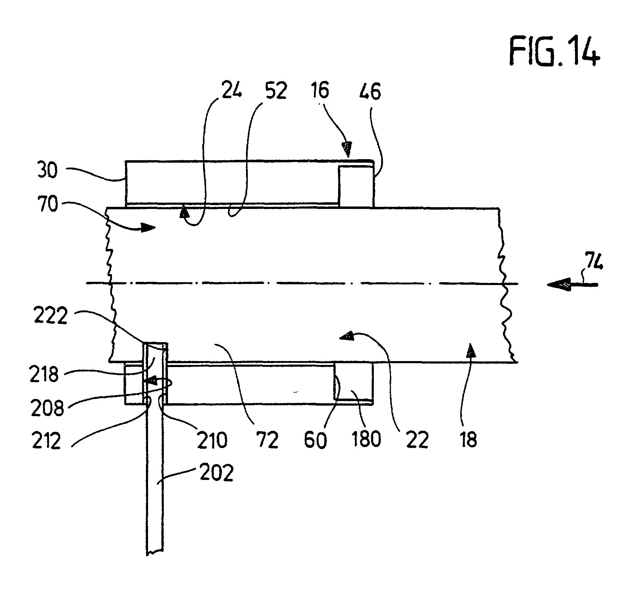

Um die Möglichkeit zu haben, mit der Blockierzunge 218 nicht nur ein Einschieben des Verriegelungsteils 22 so weit, bis die Kugel 76 in die Verriegelungsstellung bringbar ist, zu verhindern, wenn der Träger 202 in der Nutzstellung steht, sondern gleichzeitig eine zusätzliche Sicherung für das Verriegelungsteil 22 dann zu schaffen, wenn die Kugel 76 in der Verriegelungsstellung steht, ist das Gehäuse 70 im Bereich seiner Außenmantelfläche 72 insoweit, als dieser an die Aussparung 208 angrenzt, mit einem Ausschnitt 222 versehen, in welchen die Blockierzunge 218 in der Nutzstellung, wie in Fig. 14 dargestellt, formschlüssig eintaucht. Damit blockiert die Blockierzunge 218 unabhängig davon, ob die Kugel 76 in Verriegelungsstellung steht oder nicht, das Verriegelungsteil 22 gegen eine Bewegung entgegengesetzt zur Einführrichtung 74.

Das heißt, daß dann, wenn beispielsweise das Handbedienelement 26 dann bedient wird, wenn der Träger 202 in seiner Nutzstellung steht, das Verriegelungsteil 22 relativ zum Aufnahmeteil 16 nicht verschiebbar ist, so daß damit auch das Gehäuse 70 sich nicht entgegengesetzt zur Einführrichtung 74 bewegen kann und ein Loslassen des Handbedienelements 26 dazu führt, daß die Kugel 76 von ihrer Entriegelungsstellung wieder in die Verriegelungsstellung übergeht und somit das Verriegelungsteil 22 wiederum fest fixiert.

Ferner ist es möglich, durch einen genau an die Dicke des Blockierzunge 218 angepaßten Ausschnitt 222 ein Bewegen des Trägers 202 mit der Steckdose 200 von der Aufbewahrstellung in die Nutzstellung nur dann zuzulassen, wenn das Verriegelungsteil 22 in einer Stellung in der Aufnahme 24 steht, in der die Kugel 76 die Möglichkeit hat in die Verriegelungsstellung überzugehen, so daß die Nutzstellung der Steckdose 200 nur dann erreichbar ist, wenn das Verriegelungsteil 22 durch die Kugel 76 in der Aufnahme verriegelt werden kann.

Damit die Blockierzunge 218 des Trägers 202 großen Kräften in Richtung der Einführrichtung 74 oder entgegengesetzt zu dieser Stand halten kann, ist das Trägerblech 202 so ausgeführt, daß es an den Wandflächen 210 und 212 der Aussparung 208 dann abgestützt ist, wenn auf die Blockierzunge 208 Kräfte in Einführrichtung 74 oder entgegengesetzt zu dieser wirken. Dadurch, daß der Ausschnitt 222 unmittelbar an die Aussparung 208 angrenzt ist die Blockierzunge 218 bei Kräften in Einführrichtung 74 oder entgegengesetzt dazu im wesentlichen Scherkräften ausgesetzt (Fig. 14) und kann somit großen Kräften in diesen Richtungen Stand halten.

Um den Träger 202 in der Nutzstellung (Fig. 10 und 11) und in der Aufbewahrstellung (Fig. 12 und 13) jeweils fixieren zu können, ist in einer Bohrung im Aufnahmeteil 16 eine mit einer Feder 224 beaufschlagte Rastkugel 226 im Aufnahmeteil 16, und zwar der Aussparung 208 zugewandt, gelagert und die Rastkugel 226 ist in Richtung des in der Aussparung 208 liegenden Abschnitts 214 des Trägers 202 beaufschlagt, so daß die Rastkugel 226 dann in in der Nutzstellung und der Aufbewahrstellung zugeordnete Rastvertiefungen 228 bzw. 230 eintaucht, wenn diese der Rastkugel 226 gegenüberliegend angeordnet sind. Somit erfolgt sowohl in der Nutzstellung als auch in der Aufbewahrstellung jeweils ein selbsttätiges Verrasten des Trägers 202 in dieser Stellung relativ zum Aufnahmeteil 16, so daß ohne manuelle Einwirkung der Träger 202 die jeweilige Stellung nicht verläßt.

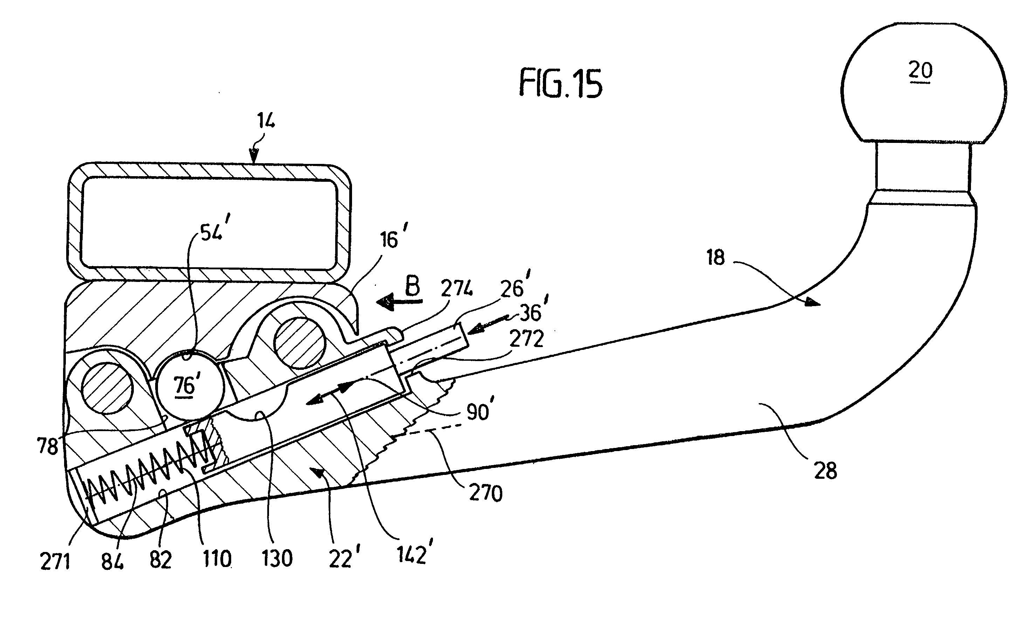

Bei einem dritten Ausführungsbeispiel einer erfindungsgemäßen Anhängevorrichtung, dargestellt in Fig. 15 bis 17 sind diejenigen Teile, die mit denen des ersten Ausführungsbeispiels identisch sind, mit denselben Bezugszeichen versehen, so daß diesbezüglich auch auf die Ausführungen zum ersten Ausführungsbeispiel vollinhaltlich Bezug genommen wird. Funktionsgleiche Teile sind mit denselben Bezugszeichen und zusätzlich mit einem ' versehen

Es ist auch beim dritten Ausführungsbeispiel möglich, das Handbedienelement 26 und das Verschiebeelement 90 so wie bei den ersten beiden Ausführungsbeispielen anzuordnen.

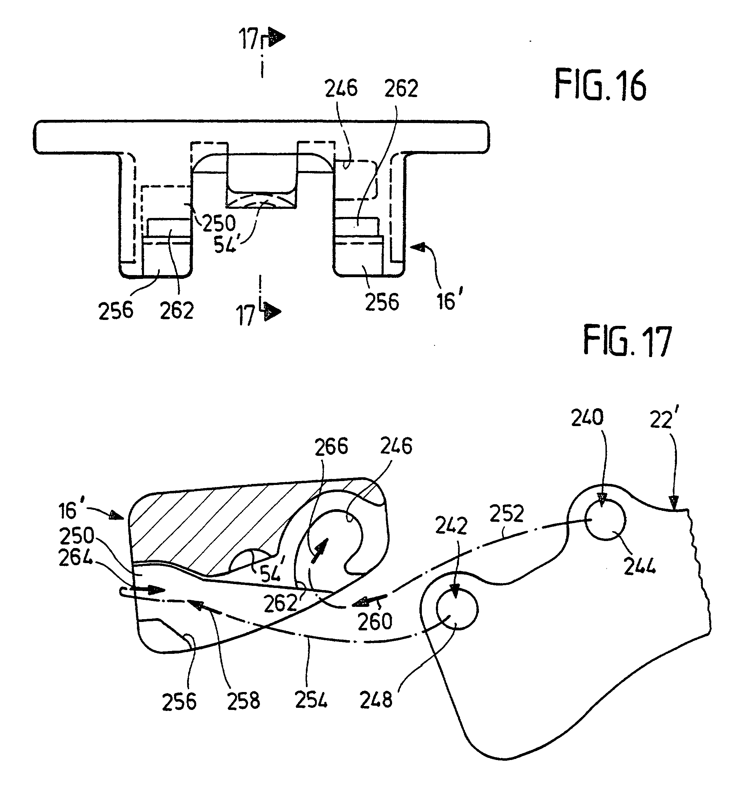

Im Gegensatz zum ersten Ausführungsbeispiel ist das Aufnahmeteil 16' nicht mit einer kreiszylindrische Führungsflächen aufweisenden Aufnahme versehen, sondern des Verriegelungsteil 22' ist , wie in Fig. 16 und 17 dargestellt, in das Aufnahmeteil 16' einhängbar.

Hierzu weist das Verriegelungsteil 22', wie in Fig. 17 verdeutlicht, jeweils beidseitig überstehende und im Abstand voneinander angeordnete Querbolzen 240 und 242 auf, wobei der Querbolzen 240 mit äußeren Enden 244 in für diese äußeren Enden vorgesehene Führungen oder Aufnahmetaschen 246 einsetzbar ist, während der Querbolzen 242 mit äußeren Enden 248 in für diese vorgesehene Führungen oder Aufnahmetaschen 250 einsetzbar ist.

Das Einsetzen der Querbolzen 240 und 242 in die hierfür vorgesehenen Aufnahmetaschen 246 und 250 ist durch Verlauflinien 252 bzw. 254 in Fig. 17 dargestellt. Hierbei ist erkennbar, daß zunächst der Querbolzen 242 mit den äußeren Enden 248 über Einlaufschrägen 256 in die Aufnahmetaschen 250 in einer Einführrichtung 258 einzuführen ist, wobei sich gleichzeitig der Bolzen 240 in einer Einführrichtung 260 bewegt. Sobald die äußeren Enden 248 des Haltebolzens 242 in den Aufnahmetaschen 250 liegen, sind durch Anheben des Kugelhalses 18 die äußeren Enden 244 des Querbolzens 240 ebenfalls über Einlaufschrägen 262 in die Aufnahmetaschen 246 einzuführen, wobei das Einführen in die Aufnahmetaschen 246 eine Umkehr der Einführrichtung 258 des Haltebolzens 242, und zwar in Richtung 264 erforderlich macht, während die Einführrichtung 260 des Haltebolzens 240 sich in eine Richtung 266 ändert, welche ebenfalls umgekehrt zur Richtung 260, jedoch in einem spitzen Winkel zu dieser nach oben verläuft.

Eine derartige Ausbildung des Aufnahmeteils 16' und des Verriegelungsteils 22' ist bereits in der europäischen Patentanmeldung 0 492 035 beschrieben.

Die Fixierung des Verriegelungsteils 22' in dem Aufnahmeteil 16' erfolgt ebenfalls über eine am Aufnahmeteil 16' vorgesehene Vertiefung 54', welche in diesem Fall zwischen den Aufnahmetaschen 246 und 250, und zwar sowohl in Längsrichtung als auch in Querrichtung liegt.

Die Tasche 54' ist dabei ebenfalls kalottenähnlich oder kugelkappenähnlich ausgebildet und dient zur Aufnahme der in Fig. 15 dargestellten Kugel 76', welche ebenfalls durch ein Verschiebeelement 90', welches mit einer Kurvenbahn 130 versehen ist, zwischen der in Fig. 15 dargestellten Verriegelungsstellung und einer zeichnerisch nicht dargestellten Entriegelungsstellung bewegbar ist, genau wie im Zusammenhang mit dem ersten Ausführungsbeispiel beschrieben.

Die Kugel 76' ist dabei genau wie bei den ersten beiden Ausführungsbeispielen in der Kugelführung 78 quer zu der Verschieberichtung 142 des Verschiebeelements 90' bewegbar, um in ihrer Verriegelungsstellung in die Tasche 54' einzugreifen.

Im Gegensatz zum ersten und zweiten Ausführungsbeispiel ist allerdings das Verschiebeelement 90' so angeordnet, daß das Handbedienelement 26' auf einer der Kupplungskugel 20 zugewandten Seite des Verriegelungsteils 22' liegt. Hierzu ist die Lagerausnehmung 82 so in das Verriegelungsteil eingearbeitet, daß deren Längsachse 84 schräg zu einer Mittelachse 270 des Endbereichs des Kugelhalses 18 verläuft und somit das Handbedienelement 26' durch einen Durchbruch 272 auf einer der Kupplungskugel 20 zugewandten Oberseite 274 des Kugelhalses 18 durchsetzt und somit in Richtung der Kupplungskugel 20 aus dem Verriegelungsteil 22' herausragt.

Das Verschiebeelement 90' ist ferner ebenfalls durch die Druckfeder 110 beaufschlagt, welche sich an einem Abschlußdeckel 271 der Lagerausnehmung 82 abstützt und funktioniert aufgrund einer in identischer Weise ausgebildeten Kurvenbahn 130 in gleicher Weise wie beim ersten Ausführungsbeispiel beschrieben. Allerdings erfolgt in diesem Fall seitens einer Bedienungsperson ein Druck auf das Handbedienelement 26' in der Bedienrichtung 36', welche von der Kupplungskugel 20 weg in Richtung auf das Verriegelungsteil 22' verläuft, während beim ersten Ausführungsbeispiel die Bedienrichtung 36 in Richtung auf das Verriegelungsteil 22, allerdings auch ungefähr in Richtung auf den Kugelhals 18 zu verläuft.

Dadurch, daß das Handbedienelement 26' im Gegensatz zum ersten Ausführungsbeispiel bei dem dritten Ausführungsbeispiel auf einer einem hinter dem Fahrzeug stehenden Benutzer zugewandten Seite liegt, ist das Handbedienelement 26' leicht zugänglich und leicht zu bedienen, wobei es in gleicher Weise wie beim ersten und zweiten Ausführungsbeispiel funktioniert, so daß auch dieses Ausführungsbeispiel in einfacher Weise herstellbar ist.

Bei allen Ausführungsbeispielen ist erfindungsgemäß vorgesehen, daß die auf das Handbedienelement wirkende Druckkraft in der Richtung gerichtet ist, in welcher das Verriegelungsteil 22, 22' zu bewegen ist, um aus einer Stellung herauszukommen, in welcher die Kugel 76, 76' die Möglichkeit hat, wieder in die Tasche 54, 54' einzugreifen und das Verriegelungsteil 22, 22' wieder zu verriegeln.

So führt beim ersten und zweiten Ausführungsbeispiel die Druckkraft in Richtung 36 auf das Handbedienelement 26 zu einer Verschiebung des Verriegelungsteils 22 in Entnahmerichtung und somit entgegengesetzt zur Einschieberichtung 74, so daß nach Übergang der Kugel 76 von der Verriegelungsstellung in die Entriegelungsstellung das Verriegelungsteil 22 sich unter Weiterwirkung der Druckkraft aus der Aufnahme 24 herausbewegt.

Auch beim dritten Ausführungsbeispiel wirkt die Druckkraft in Richtung 36' auf das Handbedienelement 26' entgegengesetzt zur Einführrichtung 264 und 266 und somit in Entnahmerichtung, so daß nach Übergang der Kugel 76' in die Entriegelungsstellung sich das Verriegelungsteil 22' unter Weiterwirkung der Druckkraft so weit verschiebt, daß die Kugel 76' nicht mehr in die Tasche 54' in Eingriff kommen kann.

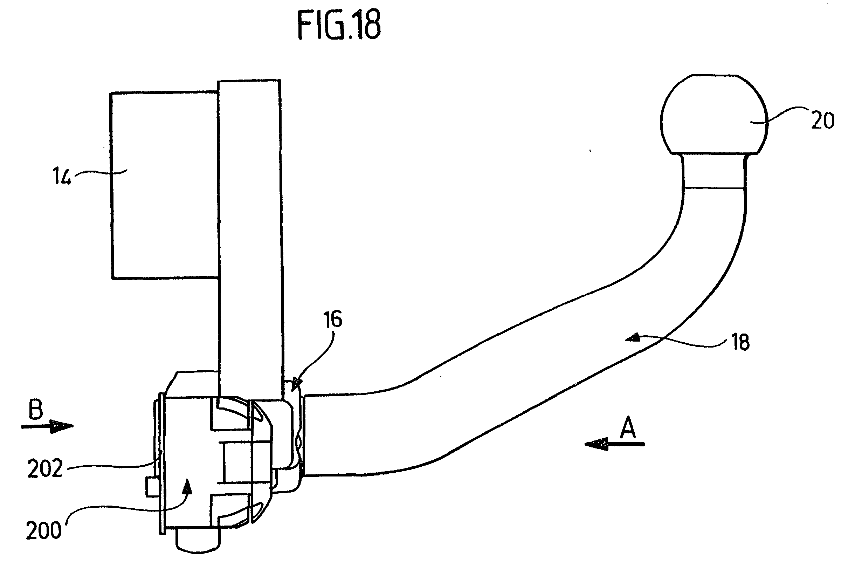

Bei einem vierten Ausführungsbeispiel, dargestellt in den Fig. 18 bis 23, welches eine Variante des zweiten Ausführungsbeispiels darstellt, sind diejenigen Teile, die mit denen der voranstehenden Ausführungsbeispiele identisch sind, mit denselben Bezugszeichen versehen, so daß hinsichtlich deren Beschreibung vollinhaltlich auf die Ausführungen zu den voranstehenden Ausführungsbeispielen Bezug genommen wird.

Insbesondere ist, wie bereits im Zusammenhang mit dem zweiten Ausführungsbeispiel beschrieben, die Steckdose 200 an einem als Ganzes mit 202 bezeichneten Träger gelagert, welche eine Halteplatte 204 für die Steckdose sowie einen Trägerarm 206 aufweist, welcher sich in Richtung des Aufnahmeteils 16 erstreckt. Der Trägerarm 206 ist dabei um die Achse 216 drehbar und gegenüber dem Aufnahmeteil 16 verschwenkbar.

Hierzu weist im Gegensatz zum zweiten Ausführungsbeispiel das Aufnahmeteil 16 eine seitlich der Aufnahme 24 liegende Lagerbohrung 300 auf, in welcher ein drehfest mit dem Trägerarm 206 im Bereich einer der Halteplatte 204 gegenüber liegenden Seite verbundener Schwenkzapfen 302 um die Achse 216 drehbar gelagert ist. Dieser Schwenkzapfen 302 dient einerseits zur drehbaren Lagerung des Trägerarms 206 und weist andererseits eine Kulissenbahn 310 auf, welche einen Blockierabschnitt 312 und einen Freigabeabschnitt 314 umfaßt, die durch einen Übergangsabschnitt 316 der Kulissenbahn 310 voneinander getrennt sind. Die Kulissenbahn 310 wird dabei durch eine in radialer Richtung zur Achse 216 variierende Mantelfläche des Schwenkzapfens 302 gebildet und wirkt mit einem als Kugel ausgebildeten Bahnfolger 320 zusammen, welcher in radialer Richtung zur Achse 216 in einer Führungsbohrung 322 geführt ist und somit in der Lage ist, durch radiale Bewegung in Richtung zur Achse 216 den verschiedenen Abschnitten 312 bis 316 der Kulissenbahn 310 zu folgen.

Die Führungsbohrung 322 erstreckt sich dabei vorzugsweise mit ihrer Längsachse 324 in radialer Richtung zur Schwenkachse 216 und somit auch quer zur Lagerbohrung 300 und reicht von der Lagerbohrung 300 bis zu der Aufnahme 24, in welche die Führungsbohrung 322 mit einer in der Führungsfläche 52 liegenden Mündungsöffnung 326 einmündet. In der Führungsbohrung 322 ist außerdem das als Zapfen 328 ausgebildete Blockierelement 218 gelagert, welches mit einem Kopfteil 330 in eine nunmehr dem Kopfteil 330 angepaßte Ausnehmung 222' in dem Verriegelungsteil 22 eintauchen kann, um ein Entnehmen des Verriegelungsteils 22 aus der Aufnahme 24 zu blockieren. Zwischen dem Blockierelement 218 und dem Bahnfolger 320 ist ein als Ganzes mit 332 bezeichnetes Tellerfederpaket angeordnet, welches einerseits an dem Bahnfolger 320 anliegt und andererseits an einer dem Bahnfolger 320 zugewandten Rückseite 334 des Zapfens 328. Ferner trägt der Zapfen 328 noch einen über die Rückseite 334 in Richtung des Bahnfolgers 320 überstehenden Fortsatz 336, welcher seinerseits eine dem Bahnfolger 320 zugewandte Anschlagfläche 338 aufweist.

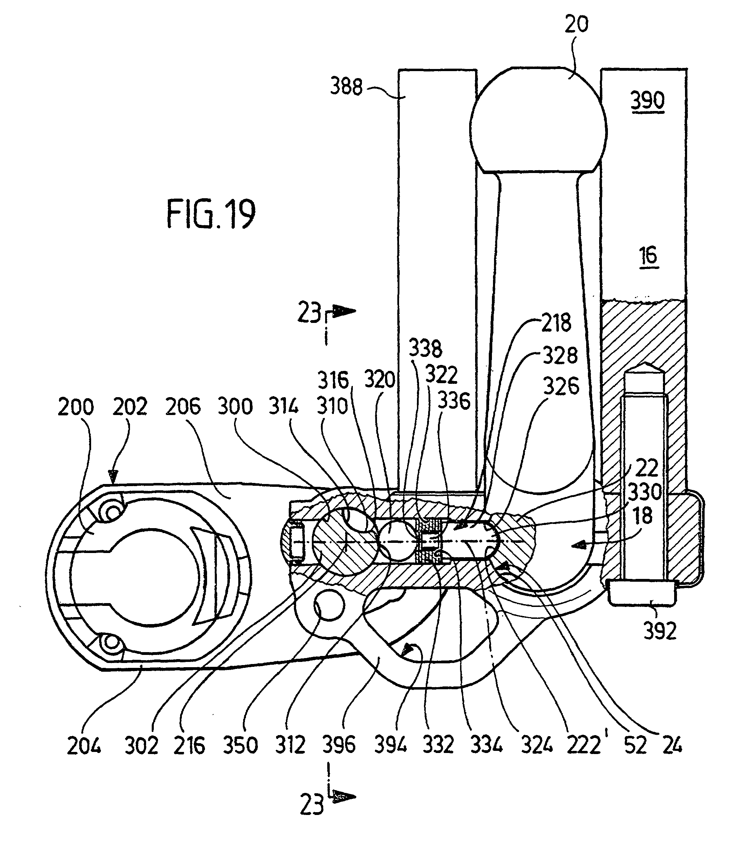

Steht nun, wie in Fig. 19 dargestellt, der Träger 202 mit der Steckdose 200 in der Nutzstellung, so ist der Schwenkzapfen 302, der drehfest mit dem Träger 202 verbunden ist, soweit verdreht, daß der Bahnfolger 320 an dem Blockierabschnitt 312 der Kulissenbahn 310 anliegt und dabei über das Tellerfederpaket 332 den Zapfen 328 so weit in Richtung des Verriegelungsteils 22 verschiebt, daß dessen Kopf 330 in der Ausnehmung 222' liegt und das Verriegelungsteil 22 gegen ein Entnehmen aus der Aufnahme 24 blockiert.

Das Federpaket 332 dient dabei dazu, einerseits den Kopf 330 des Zapfens 328 spielfrei in der Ausnehmung 222' zu halten und somit auch das Verriegelungsteil 22 spielfrei in der Aufnahme 24 zu fixieren, andererseits aber auch dazu, den Bahnfolger 320 in Anlage an dem Blockierabschnitt 312 zu halten.

Um jedoch sicherzustellen, daß auch bei großen, auf die Kupplungskugel 20 wirkenden Kräften kein Bewegen des Kopfes 330 aus der Ausnehmung 222' erfolgen kann, ist der Fortsatz 336 so dimensioniert, daß dessen Anschlagfläche 338 in geringem Abstand von dem als Kugel ausgebildeten Bahnfolger 320 steht, so daß selbst dann, wenn bei großen Kräften das Tellerfederpaket 332 aufgrund seiner Elastizität nachgeben würde, eine Bewegung des Kopfes 330 aus der Ausnehmung 222' heraus mechanisch dadurch blockiert ist, daß die Anschlagfläche 338 des Fortsatzes 336 an dem als Kugel ausgebildeten Bahnfolger 320 anliegen würde und somit eine mechanische Blockierung der Bewegung des Kopfes 330 aus der Ausnehmung 222' vorliegt.

Ferner weist vorzugsweise der Blockierabschnitt 312 eine gegenüber dem Übergangsabschnitt 316 geringfügig geringere radiale Erstreckung auf, so daß eine Einwirkung des Bahnfolgers 320 auf den Blockierabschnitt 312 in keinem Fall zu einer Verdrehung des Schwenkzapfens 302 derart führen kann, daß aufgrund einer Druckkraft des Bahnfolgers 320 auf die Kulissenbahn 310 diese sich mit dem Übergangsabschnitt 316 an dem Bahnfolger 320 vorbeibewegt.

Vielmehr ist bei einem Übergang des Trägers 202 von der Nutzstellung in die Aufbewahrstellung der Steckdose 200 der Bahnfolger 320 gegen die Kraftwirkung des Federpaketes 332 in Richtung des Blockierelements 218 zu bewegen, um den Übergangsabschnitt 316 am Bahnfolger 320 vorbeibewegen zu können, so daß der Bahnfolger 320 danach mit dem Freigabeabschnitt 314 zusammenwirkt, welcher gegenüber dem Blockierabschnitt 312 einen geringeren radialen Abstand von der Schwenkachse 216 aufweist.

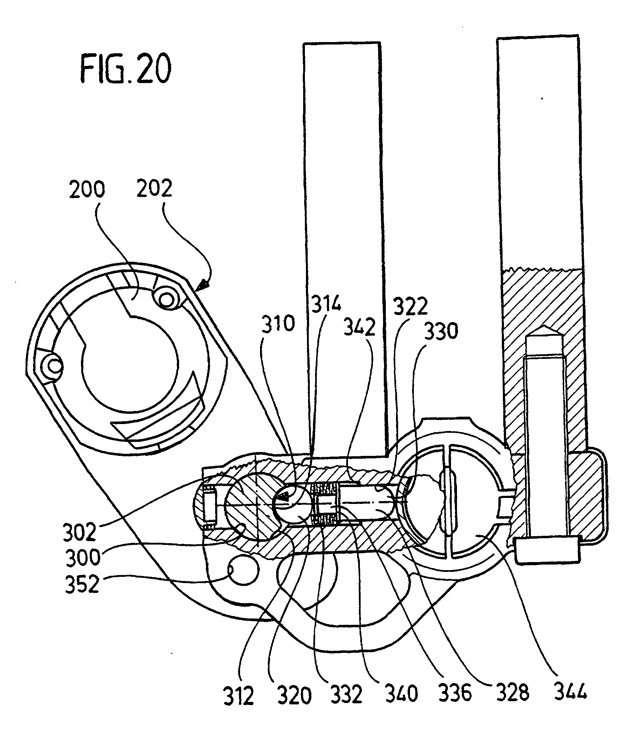

Ist, wie in Fig. 20 dargestellt, der Träger 202 in der Aufbewahrstellung positioniert, so hat der Bahnfolger 320 die Möglichkeit, sich von dem Verriegelungsteil 22 weg zu bewegen und somit ist auch sowohl das Federpaket 332 als auch der Zapfen 328 in Richtung des Schwenkzapfens 302 bewegbar, so daß ein Entnehmen des Verriegelungsteils 22 aus der Aufnahme 24 möglich ist.

Vorzugsweise sind der Kopf 330 und die Ausnehmung 222' ungefähr kalottenförmig ausgebildet, so daß ohne Kraftbeaufschlagung des Zapfens 328 beim Bewegen des Verriegelungsteils 22 der Kopf 330 aus der Ausnehmung 222' heraus in Richtung des Schwenkzapfens 302 bewegbar ist, wie in Fig. 19 dargestellt.

Um sicherzustellen, daß der Zapfen 328 nur über einen maximalen Verschiebeweg in Richtung der Aufnahme 24 bewegbar ist, ist der Zapfen 328 noch mit einem Bund 340 versehen, welcher an einer Flanschfläche 342 in einer maximal in Richtung der Aufnahme 24 verschobenen Stellung des Zapfens 328 anlegbar ist.

Um die Aufnahme 24 gegen Verschmutzung zu sichern, ist vorzugsweise vorgesehen, daß diese bei entnommenen Verriegelungsteil 22 durch eine Verschlußkappe 344 verschließbar ist.

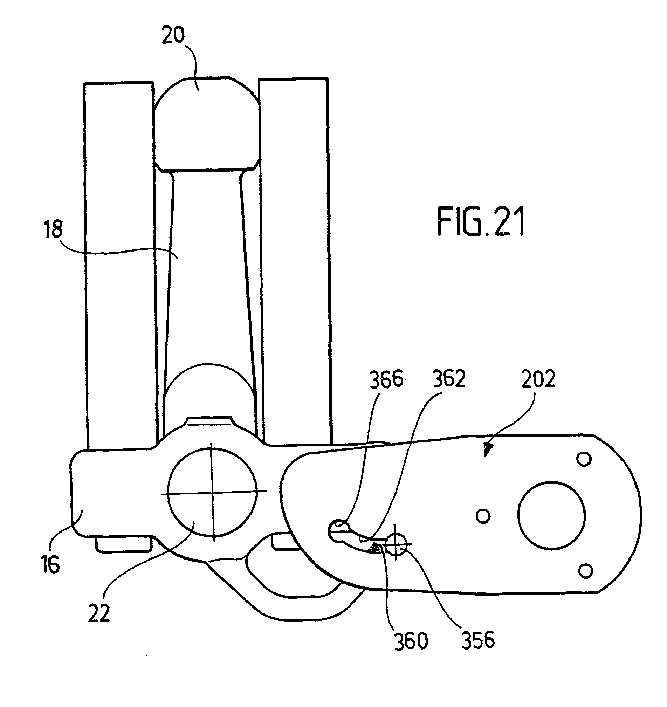

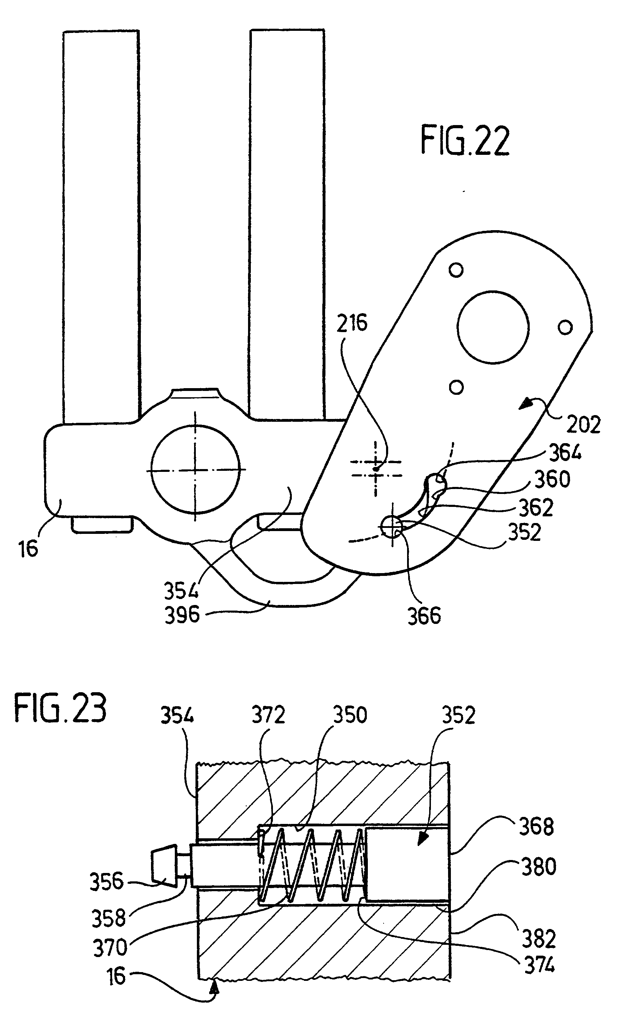

Zum Fixieren des Trägers 202 sowohl in der Nutzstellung, dargestellt in Fig. 19 und 21, sowie in der Aufbewahrstellung, dargestellt in Fig. 20 und 22, ist an dem Aufnahmeteil 16, und zwar in einer parallel zur Lagerbohrung 300 verlaufenden Bohrung 350 ein Fixierzapfen 352 angeordnet, welcher, wie in Fig. 23 dargestellt, über eine Rückseite 354 des Aufnahmeteils 16 übersteht und einen Fixierkopf 356 aufweist, sowie einen im Anschluß an diesen angeordneten ringsumlaufenden Einschnitt 358. Ferner weist der Träger 202 eine als Kreisringsegment schlitzförmig ausgebildete Ausnehmung 360 auf, welche jeweils endseitig gegenüber einem Schlitzbereich 362 erweiterte Bereiche 364 und 366 umfaßt, die so dimensioniert sind, daß in diesen der Fixierkopf 356 positionierbar ist, um den Träger 202 festzulegen, wobei der Fixierkopf 356 in dem erweiterten Bereich 364 den Träger 202 in der Nutzstellung und in dem erweiterten Bereich 366 den Träger 202 in der Aufbewahrstellung festlegt. Aufgrund des schlitzförmigen Bereichs 362 ist der Träger 202 dann, wenn der Fixierkopf 356 in einem der erweiterten Bereiche 364 und 366 steht, nicht mehr um die Schwenkachse 216 schwenkbar.

Wird jedoch der Fixierbolzen 352 durch Beaufschlagen einer vorderen Druckfläche 368 in Richtung der Rückseite 354 des Aufnahmeteils 16 verschoben, so ist der Fixierkopf 356 aus den erweiterten Bereichen 364 oder 366 heraus bewegbar und der Einschnitt 358 liegt so, daß der schlitzförmige Bereich 362 in den Einschnitt 358 eingreifend relativ zum Fixierbolzen 352 bewegbar ist.

Um sicherzustellen, daß der Fixierbolzen 352 stets seine fixierende Stellung einnimmt, ist dieser vorzugsweise mit einer Druckfeder 370 beaufschlagt, welche sich beispielsweise an einer Stufe 372 der als Stufenbohrung ausgeführten Bohrung 350 einerseits und andererseits an einer Flanschfläche 374 des Fixierbolzens 352 abstützt und somit den Fixierbolzen 352 stets soweit verschiebt, daß dann,. wenn der Fixierkopf 356 die Möglichkeit hat, in einen der erweiterten Bereiche 364 und 366 einzutauchen, dies auch erfolgt.

Durch den Fixierbolzen 352 besteht somit die Möglichkeit, den Träger 202 mit der Steckdose 200 zusätzlich sowohl in der Aufbewahrstellung als auch in der Nutzstellung sicher zu fixieren, wobei insbesondere die zusätzliche Sicherung des Trägers 202 in der Nutzstellung dazu dient, eine durch irgendwelche äußeren Einflüsse hervorgerufene Verdrehung des Schwenkzapfens 302 zu verhindern und somit sicherzustellen, daß das Blockierelement 218 stets die Entnahme des Verriegelungsteils 22 aus der Aufnahme 24 blockiert.

Das Vorsehen des Fixierbolzens 352 bietet ferner noch die Möglichkeit, die fixierende Stellung und somit beispielsweise die verriegelte Stellung des Verriegelungsteils 22 im Aufnahmeteil 16 optisch anzuzeigen, nämlich dadurch, daß ein sich an die vordere Druckfläche 368 anschließender Umfangsbereich 380 des Fixierbolzens 352 über eine Vorderseite 382 des Aufnahmeteils 16 übersteht, nämlich dann, wenn der Fixierbolzen 352 in seiner den Träger 202 entweder in der Nutzstellung oder der Aufbewahrstellung fixierenden Stellung steht.

Um den Bereich 380 optisch deutlich erkennbar zu machen, ist es beispielsweise möglich, den Bereich 380 mit einer Signalfarbe zu versehen.

Ferner ist auch durch Tasten die Fixierstellung des Fixierbolzens 352 leicht erkennbar, nämlich dann, wenn die Druckfläche 368 über die Vorderseite 382 des Aufnahmeteils übersteht oder im Gegensatz dazu in der nicht fixierenden Stellung ungefähr fluchtend mit der Vorderseite 382 verläuft.

Bei dem vierten Ausführungsbeispiel ist vorzugsweise noch das Aufnahmeteil 16 nicht direkt an dem Querträger 14 fixiert, sondern über zwei beiderseits der Aufnahme 24 von dem Aufnahmeteil 16 zum Querträger verlaufende Adaptionsbolzen 388 und 390 an dem Querträger 14 fixiert, so daß vorzugsweise das Aufnahmeteil 16 den Bereich der der Fahrbahn nächstliegenden Stelle der Anhängekupplung bildet, und sich der Kugelhals 18 ausgehend von dem Aufnahmeteil 16 mit zunehmendem Abstand von der Fahrbahn erstreckt. Damit bietet einerseits das Aufnahmeteil 16 die Möglichkeit, den lösbar in diesem gehaltenen Kugelhals 18 gegen Beschädigungen dann zu schützen, wenn das Kraftfahrzeug beispielsweise mangels geringer Bodenfreiheit aufsetzt, da das Aufsetzen im Bereich des Aufnahmeteils 16 erfolgt, das fest mit der Karosserie des Kraftfahrzeugs verbunden ist, und nicht mit dem in dem Aufnahmeteil 16 lösbaren Kugelhals.

Darüber hinaus schaffen die Adaptionsbolzen 388 und 390 die Möglichkeit, eine einfache Adaption des Aufnahmeteils 16 an unterschiedliche Fahrzeugtypen vorzunehmen, da durch unterschiedliche Länge der Adaptionsbolzen 388, 390 die Höhenpositionierung des Aufnahmeteils 16 relativ zum Querträger 14 in einfacher Weise von Fahrzeugtype zu Fahrzeugtype variierbar ist.

Vorzugsweise ist dabei das Aufnahmeteil 16 jeweils mit Schrauben 392 an den Adaptionsbolzen 388 und 390 fixiert, so daß dadurch auch ein einfacher Anbau des Aufnahmeteils 16 an die Adaptionsbolzen 388 und 390 möglich ist, die ihrerseits beispielsweise fest mit dem Querträger 14 verbunden sein können. Damit kann bei jeweils fahrzeugspezifischer Ausbildung des Querträgers 14 und der Adaptionsbolzen 388 und 390 stets dasselbe Aufnahmeteil 16 bei den unterschiedlichsten Fahrzeugtypen eingesetzt werden.

Ferner ist noch durch den einsteckbaren Kugelhals 18, insbesondere dessen Krümmung, eine fahrzeugtypische Adaption möglich, wobei jeweils das Aufnahmeteil 16 als Gleichteil bei allen Fahrzeugtypen verwendbar ist.

Zusätzlich ist vorzugsweise das Aufnahmeteil 16 noch mit einer Öse 394 für ein anhängerseitiges Abreißseil versehen, so daß im Gegensatz zu den bisherigen Anhängekupplungen, bei welchen das Abreißseil jeweils um den Kugelhals zu schlingen ist, das Abreißseil an dem fahrzeugfesten Aufnahmeteil 16 fixierbar ist und somit auch für das Abreißseil ein Auslösen der Bremse des Anhängers dann erfolgt, wenn sich beispielsweise der Kugelhals 18 aus dem Aufnahmeteil 16 lösen würde, was bei den bisherigen Arten der Befestigung des Abreißseiles am Kugelhals 18 unterhalb der Kupplungskugel 20 nicht gegeben ist.

Vorzugsweise ist die Öse 394 durch einen sich an einer Unterseite des Aufnahmeteils 16 im Bereich unterhalb der Führungsbohrung 322 erstreckenden Bügel 396 gebildet, welcher sich beispielsweise von einem die Bohrung 350 für den fixierten Zapfen 352 aufnehmenden Bereich des Aufnahmeteils 16 bis zu einem mit der Aufnahme 24 versehenen Bereich des Aufnahmeteils 16 erstreckt.

## Patentansprüche

1. Anhängevorrichtung für Kraftfahrzeuge, umfassend ein fahrzeugfestes Aufnahmeteil (16), einen lösbar mit dem Aufnahmeteil (16) verbindbaren Kugelhals (18), eine an einem ersten Ende des Kugelhalses (18) angeordnete Kupplungskugel (20) und ein an einem zweiten Ende des Kugelhalses (18) angeordnetes Verriegelungsteil (22), welches in die Aufnahme des Aufnahmeteils (16) einsetzbar und in dieser verriegelbar ist, und einen eine Steckdose (200) für einen Stecker zur Anhängerstromversorgung haltenden Träger (202), welcher von einer die Steckdose (200) zur Benutzung positionierenden Nutzstellung in eine Aufbewahrstellung relativ zu einer Fahrzeugkarosserie bewegbar ist,
**dadurch gekennzeichnet, daß** der Träger (202) mit einem Blockierelement (218) zusammenwirkt, welches in der Nutzstellung des Trägers (202) ein Entnehmen des Kugelhalses (18) aus dem Aufnahmeteil (16) durch Formschluß blockiert und in der Aufbewahrstellung des Trägers (202) den Kugelhals (18) freigibt.

2. Anhängevorrichtung nach Anspruch 1, **dadurch gekennzeichnet, daß** der Kugelhals (18) eine Ausnehmung (222) aufweist, mit welcher das Blockierelement (218) in Eingriff bringbar ist.

3. Anhängevorrichtung nach Anspruch 2, **dadurch gekennzeichnet, daß** das Blockierelement (218) in einer fahrzeugfesten Führung (208) bewegbar geführt ist und gegen Krafteinwirkungen in Entnahmerichtung des Kugelhalses (18) oder entgegengesetzt dazu abgestützt ist.

4. Anhängevorrichtung nach Anspruch 3, **dadurch gekennzeichnet, daß** die Führung (208) zwei parallel zu einer Bewegungsrichtung des Blockierelements (218) verlaufende Stützflächen (210, 212) aufweist, an welchen das Blockierelement (218) oder der das Blockierelement (218) haltende Träger (202) mindestens in der Nutzstellung abstützbar ist.

5. Anhängevorrichtung nach Anspruch 3 oder 4, **dadurch gekennzeichnet, daß** die Führung (208) in dem Aufnahmeteil (16) angeordnet ist.

6. Anhängevorrichtung nach einem der voranstehenden Ansprüche, **dadurch gekennzeichnet, daß** der Träger (202) an einem Schwenklager um eine Achse (216) schwenkbar gelagert ist.

7. Anhängevorrichtung nach Anspruch 6, **dadurch gekennzeichnet, daß** das Schwenklager eine ungefähr in Fahrzeuglängsrichtung verlaufende Schwenkachse (216) aufweist.

8. Anhängevorrichtung nach Anspruch 6 oder 7, **dadurch gekennzeichnet, daß** das Schwenklager (216) für den Träger (202) fahrzeugfest angeordnet ist.

9. Anhängevorrichtung nach einem der voranstehenden Ansprüche, **dadurch gekennzeichnet, daß** der Träger (202) an dem Aufnahmeteil (16) beweglich gelagert ist.

10. Anhängevorrichtung nach einem der voranstehenden Ansprüche, **dadurch gekennzeichnet, daß** der Träger (202) in der Nutzstellung und/oder der Aufbewahrstellung fixierbar ist.

11. Anhängevorrichtung nach Anspruch 10, **dadurch gekennzeichnet, daß** der Träger (202) sowohl in der Nutzstellung als auch in der Aufbewahrstellung fixierbar ist.

12. Anhängevorrichtung nach Anspruch 10 oder 11, **dadurch gekennzeichnet, daß** der Träger (202) durch eine Rasteinrichtung (224, 226, 228, 230) in der jeweiligen Nutzstellung und/oder AUfbewahrstellung festlegbar ist.

13. Anhängevorrichtung nach einem der voranstehenden Ansprüche, **dadurch gekennzeichnet, daß** der Träger (202) in der Nutzstellung durch eine Sicherungseinrichtung (352, 362) fixierbar ist.

14. Anhängevorrichtung nach Anspruch 13, **dadurch gekennzeichnet, daß** die Sicherungseinrichtung (352, 362) ein in Richtung einer den Träger (202) fixierenden Stellung kraftbeaufschlagtes Sicherungselement (352) aufweist.

15. Anhängevorrichtung nach einem der voranstehenden Ansprüche, **dadurch gekennzeichnet, daß** der Träger (202) mittels eines Getriebes (310 320) auf das Blockierelement (218) wirkt.

16. Anhängevorrichtung nach Anspruch 15, **dadurch gekennzeichnet, daß** der Träger (202) mittels eines Keilgetriebes (310, 320) auf das Blockierelement (218) wirkt.

17. Anhängevorrichtung nach Anspruch 15 oder 16, **dadurch gekennzeichnet, daß** mit dem Träger (202) eine Kulissenbahn (310) und ein Bahnfolger (320) relativ zueinander bewegbar sind, um das Blockierelement (218) zwischen einer Blockierstellung und einer Freigabestellung zu bewegen.

18. Anhängevorrichtung nach einem der Ansprüche 15 bis 17, **dadurch gekennzeichnet, daß** zwischen dem Getriebe (310, 320) und dem Blockierelement (218) ein elastischer Kraftspeicher (332) vorgesehen ist.

19. Anhängevorrichtung nach Anspruch 18, **dadurch gekennzeichnet, daß** das Blockierelement (218) in seiner das Entnehmen des Verriegelungsteils (22) aus dem Aufnahmeteil (16) blockierenden Stellung gegen eine Bewegung in Richtung einer das Verriegelungsteil (22) freigebenden Stellung durch das Getriebe (310, 320) mechanisch unelastisch blockiert ist.

20. Anhängevorrichtung nach einem der Ansprüche 1 bis 14, **dadurch gekennzeichnet, daß** der Träger (202) und das Blockierelement (218) gemeinsam bewegbar sind.

21. Anhängevorrichtung nach Anspruch 20, **dadurch gekennzeichnet, daß** der Träger (202) und das Blockierelement (218) fest miteinander verbunden sind.

22. Anhängevorrichtung nach Anspruch 21, **dadurch gekennzeichnet, daß** das Blockierelement (218) einstückig an den Träger (202) angeformt ist.

23. Anhängevorrichtung für Kraftfahrzeuge, nach einem der voranstehenden Ansprüche, **dadurch gekennzeichnet, daß** in dem Verriegelungsteil (22) ein mittels eines Handbedienelements (26) von einer aktiven Stellung in eine inaktive Stellung bewegbares Verschiebeelement (90) angeordnet ist, welches in Richtung der aktiven Stellung federbeaufschlagt ist, und ein Verriegelungskörper (76), welcher durch eine an dem Verschiebeelement (90) angeordnete und mit diesem bewegbare Kurvenbahn (130) quer zu einer Bewegungsrichtung des Verschiebeelements (90) von einer Entriegelungsstellung in eine Verriegelungsstellung und umgekehrt bringbar ist und welcher in der Verriegelungsstellung in eine Riegelkörperaufnahme (54) in dem Aufnahmeteil (16) eingreift und damit das Verriegelungsteil (22) relativ zum Aufnahmeteil (16) verriegelt, und daß das Handbedienelement (26) in einer Art und Weise bewegbar ist, welcher der Art und Weise der Bewegbarkeit des Verschiebeelements (90) entspricht.

24. Anhängevorrichtung nach Anspruch 23, **dadurch gekennzeichnet, daß** das Handbedienelement (26) und das Verschiebeelement (90) übersetzungsfrei zusammenwirken.

25. Anhängevorrichtung nach Anspruch 23 oder 24, **dadurch gekennzeichnet, daß** das Handbedienelement (26) und das Verschiebeelement (90) längs derselben Bewegungsbahn (142) verschiebbar sind.

26. Anhängevorrichtung nach einem der Ansprüche 23 bis 25, **dadurch gekennzeichnet, daß** das Handbedienelement (26) und das Verschiebeelement (90) linear verschiebbar sind.

27. Anhängevorrichtung nach einem der Ansprüche 23 bis 26, **dadurch gekennzeichnet, daß** das Handbedienelement (26) an dem Verriegelungsteil (22) angeordnet ist.

28. Anhängevorrichtung nach Anspruch 27, **dadurch gekennzeichnet, daß** das Handbedienelement (26) auf einer einem Mittelstück (28) des Kugelhalses (18) abgewandten Seite des Verriegelungsteils (22) liegt.

29. Anhängevorrichtung nach einem der Ansprüche 23bis 26, **dadurch gekennzeichnet, daß** das Handbedienelement (26') auf einer einem Mittelstück (28) des Kugelhalses (18) zugewandten Seite des Verriegelungsteils (22') angeordnet ist.

30. Anhängevorrichtung nach Anspruch 29, **dadurch gekennzeichnet, daß** das Handbedienelement (26') auf einer der Kupplungskugel (20) zugewandten Seite des Verriegelungsteils (22') angeordnet ist.

31. Anhängevorrichtung nach einem der Ansprüche 23 bis 30, **dadurch gekennzeichnet, daß** das Handbedienelement (26) im Bereich einer Endfläche des Verriegelungsteils (22) angeordnet ist.

32. Anhängevorrichtung nach einem der Ansprüche 23 bis 31, **dadurch gekennzeichnet, daß** das Handbedienelement (26, 26') so angeordnet ist, daß eine zum Betätigen desselben erforderliche Kraft in einer Kraftrichtung (36, 36') wirkt, welche eine Komponente in einer der Einführrichtung (74, 226) entgegengesetzten Entnahmerichtung aufweist.

33. Anhängevorrichtung nach einem der Ansprüche 23 bis 32, **dadurch gekennzeichnet, daß** die Kurvenbahn (130) einen den Verriegelungskörper (90) in der Entriegelungsstellung aufnehmenden Vertiefungsabschnitt (132) aufweist und einen den Verriegelungskörper (90) in der Verriegelungsstellung haltenden Druckabschnitt (138).

34. Anhängevorrichtung nach Anspruch 33, **dadurch gekennzeichnet, daß** sich an den Vertiefungsabschnitt (132) ein sich in Richtung des Druckabschnitts (138) erstreckender Ausschiebeabschnitt (134) anschließt, welcher gegenüber der Bewegungsrichtung (142) eine größere Steigung aufweist als der Druckabschnitt (138).

35. Anhängevorrichtung nach Anspruch 34, **dadurch gekennzeichnet, daß** zwischen dem Ausschiebeabschnitt (134) und dem Druckabschnitt (138) ein Sicherungsabschnitt (136) angeordnet ist.

36. Anhängevorrichtung nach Anspruch 35, **dadurch gekennzeichnet, daß** der Sicherungsabschnitt (136) gegenüber der Bewegungsrichtung (142) eine Steigung aufweist, welche maximal einem Winkel entspricht, bei welchem eine Selbsthemmung auftritt.

37. Anhängevorrichtung nach einem der Ansprüche 23 bis 36, **dadurch gekennzeichnet, daß** ein Gehäuse (70) des Verriegelungsteils (22) durch einen Endbereich des Kugelhalses (18) gebildet ist.

38. Anhängevorrichtung nach einem der Ansprüche 23 bis 37, **dadurch gekennzeichnet, daß** bei in dem Aufnahmeteil (16) eingesetztem Verriegelungsteil (22, 22') eine Mittelachse (50, 270) des Verriegelungsteils (22, 22') schräg oder quer zu einer Senkrechten verläuft.

39. Anhängevorrichtung nach einem der Ansprüche 23 bis 38, **dadurch gekennzeichnet, daß** an dem Verriegelungsteil (22) eine Haltevorrichtung (150) vorgesehen ist, mit welcher in einer Haltestellung derselben das Verschiebeelement (90) in der inaktiven Stellung festlegbar ist und welche bei Betätigung in eine Freigabestellung übergeht und das Verschiebeelement freigibt.

40. Anhängevorrichtung nach Anspruch 39, **dadurch gekennzeichnet, daß** das Aufnahmeteil (16) mit einer Betätigungsfläche (52) versehen ist, durch welche eine Betätigung der Halteeinrichtung (150) erfolgt.

41. Anhängevorrichtung nach einem der Ansprüche 23 bis 40, **dadurch gekennzeichnet, daß** das Handbedienelement (26) von einer deformierbaren Schutzkappe (34) überdeckt ist.

## Claims

1. Towing device for motor vehicles, comprising a vehicle-fixed receiving part (16), a ball neck (18) releasably connectable to the receiving part (16), a coupling ball (20) disposed on a first end of the ball neck (18) and a locking part (22) disposed on a second end of the ball neck (18) and insertable as well as lockable in the receiving means of the receiving part (16), and a carrier (202), which holds a socket (200) for a connector for the trailer power supply and is movable relative to a vehicle body from an operating position, which positions the socket (200) for use, into a storage position,
**characterized in that** the carrier (202) interacts with a blocking element (218), which in the operating position of the carrier (202) positively prevents removal of the ball neck (18) from the receiving part (16) and in the storage position of the carrier (202) releases the ball neck (18).

2. Towing device according to claim 1, **characterized in that** the ball neck (18) has a recess (222), with which the blocking element (218) is bringable into engagement.

3. Towing device according to claim 2, **characterized in that** the blocking element (218) is guided movably in a vehicle-fixed guide (208) and supported against the effects of force in the direction of removal of the ball neck (18) or in the opposite direction thereto.

4. Towing device according to claim 3, **characterized in that** the guide (208) comprises two support surfaces (210, 212), which extend parallel to a direction of motion of the blocking element (218) and on which the blocking element (218) or the carrier (202) holding the blocking element (218) is supportable at least in the operating position.

5. Towing device according to claim 3 or 4, **characterized in that** the guide (208) is disposed in the receiving part (16).

6. Towing device according to one of the preceding claims, **characterized in that** the carrier (202) is mounted on a pivot bearing so as to be pivotable about an axis (216).

7. Towing device according to claim 6, **characterized in that** the pivot bearing comprises a swivelling axis (216) extending approximately in vehicle longitudinal direction.

8. Towing device according to claim 6 or 7, **characterized in that** the pivot bearing (216) for the carrier (202) is disposed in a vehicle-fixed manner.

9. Towing device according to one of the preceding claims, **characterized in that** the carrier (202) is mounted movably on the receiving part (16).

10. Towing device according to one of the preceding claims, **characterized in that** the carrier (202) is fixable in the operating position and/or the storage position.

11. Towing device according to claim 10, **characterized in that** the carrier (202) is fixable both in the operating position and in the storage position.

12. Towing device according to claim 10 or 11, **characterized in that** the carrier (202) is fixable in the respective operating position and/or storage position by means of a detent device (224, 226, 228, 230).

13. Towing device according to one of the preceding claims, **characterized in that** the carrier (202) is fixable in the operating position by means of a securing device (352, 362).

14. Towing device according to claim 13, **characterized in that** the securing device (352, 362) comprises a securing element (352), which is loaded by force in the direction of a position fixing the carrier (202).

15. Towing device according to one of the preceding claims, **characterized in that** the carrier (202) acts by means of a gear (310 320) upon the blocking element (218).

16. Towing device according to claim 15, **characterized in that** the carrier (202) acts by means of a wedge gear (310, 320) upon the blocking element (218).

17. Towing device according to claim 15 or 16, **characterized in that** with the carrier (202) a guide path (310) and a path follower (320) are movable relative to one another in order to move the blocking element (218) between a blocking position and a release position.

18. Towing device according to one of claims 15 to 17, **characterized in that** an elastic energy storage mechanism (332) is provided between the gear (310, 320) and the blocking element (218).

19. Towing device according to claim 18,**characterized in that** the blocking element (218) in its position blocking the removal of the locking part (22) from the receiving part (16) is mechanically inelastically locked by the gear (310, 320) against a movement in the direction of a position releasing the locking part (22).

20. Towing device according to one of claims 1 to 14, **characterized in that** the carrier (202) and the blocking element (218) are jointly movable.

21. Towing device according to claim 20, **characterized in that** the carrier (202) and the blocking element (218) are firmly connected to one another.

22. Towing device according to claim 21, **characterized in that** the blocking element (218) is integrally formed on the carrier (202).

23. Towing device for motor vehicles, according to one of the preceding claims, **characterized in that** disposed in the locking part (22) is a displacement element (90), which is movable by means of a hand-operated element (26) from an active position to an inactive position and which is spring-loaded in the direction of the active position and a locking body (76), which is movable by means of a curved path (130), which is disposed on and movable with the displacement element (90), transversely of a direction of motion of the displacement element (90) from an unlocking position into a locking position and vice versa and which in the locking position engages into a latch body receiving means (54) in the receiving part (16) and hence locks the locking part (22) relative to the receiving part (16), and that the hand-operated element (26) is movable in a manner corresponding to the manner of mobility of the displacement element (90).

24. Towing device according to claim 23, **characterized in that** the hand-operated element (26) and the displacement element (90) interact without transmission reduction.

25. Towing device according to claim 23 or 24, **characterized in that** the hand-operated element (26) and the displacement element (90) are displaceable along the same path of motion (142).

26. Towing device according to one of claims 23 to 25, **characterized in that** the hand-operated element (26) and the displacement element (90) are displaceable linearly.

27. Towing device according to one of claims 23 to 26, **characterized in that** the hand-operated element (26) is disposed on the locking part (22).

28. Towing device according to claim 27, **characterized in that** the hand-operated element (26) lies at a side of the locking part (22) remote from a middle piece (28) of the ball neck (18).

29. Towing device according to one of claims 23 to 26, **characterized in that** the hand-operated element (26') is disposed at a side of the locking part (22') facing a middle piece (28) of the ball neck (18).

30. Towing device according to claim 29, **characterized in that** the hand-operated element (26') is disposed at a side of the locking part (22') facing the coupling ball (20).

31. Towing device according to one of claims 23 to 30, **characterized in that** the hand-operated element (26) is disposed in the region of an end face of the locking part (22).

32. Towing device according to one of claims 23 to 31, **characterized in that** the hand-operated element (26, 26') is disposed in such a way that a force needed for its actuation acts in a direction of force (36, 36'), which has a component in a direction of removal, which is opposite to the direction of introduction (74, 226).

33. Towing device according to one of claims 23 to 32, **characterized in that** the curved path (130) comprises an indentation portion (132), which receives the locking body (90) in the unlocking position, and a pressure portion (138), which holds the locking body (90) in the locking position.

34. Towing device according to claim 33, **characterized in that** the indentation portion (132) is adjoined by a push-out portion (134), which extends in the direction of the pressure portion (138) and in relation to the direction of motion (142) has a greater ascending gradient than the pressure portion (138).

35. Towing device according to claim 34, **characterized in that** a securing portion (136) is disposed between the push-out portion (134) and the pressure portion (138).

36. Towing device according to claim 35, **characterized in that** the securing portion (136) in relation to the direction of motion (142) has an inclination corresponding at most to an angle, at which self-locking occurs.

37. Towing device according to one of claims 23 to 36, **characterized in that** a housing (70) of the locking part (22) is formed by an end region of the ball neck (18).

38. Towing device according to one of claims 23 to 37, **characterized in that**, when the locking part (22, 22') is inserted in the receiving part (16), a centre line (50, 270) of the locking part (22, 22') extends obliquely to or transversely of a vertical.

39. Towing device according to one of claims 23 to 38, **characterized in that** provided on the locking part (22) is a retaining device (150), by means of which in a retaining position thereof the displacement element (90) is fixable in the inactive position and which upon actuation transfers to a release position and releases the displacement element.

40. Towing device according to claim 39, **characterized in that** the receiving part (16) is provided with an actuating surface (52), by means of which an actuation of the retaining device (150) is effected.

41. Towing device according to one of claims 23 to 40, **characterized in that** the hand-operated element (26) is covered by a deformable protective cap (34).

## Revendications

1. Dispositif de remorquage pour véhicules automobiles, comprenant un élément de logement (16) fixé au véhicule, un col à boule (18) pouvant être relié de manière amovible à l'élément de logement (16), une boule d'accouplement (20) disposée au niveau d'une première extrémité du col à boule (18), et un élément de verrouillage (22), disposé au niveau d'une deuxième extrémité du col à boule (18), qui peut être inséré dans le logement de l'élément de logement (16) et qui peut être verrouillé dans celui-ci, et un support (202) comportant une prise (200) pour un enfichage pour l'alimentation en courant d'une remorque, le support pouvant être déplacé par rapport à une carrosserie de véhicule, d'une position d'utilisation en laquelle la prise (200) est positionnée pour être utilisée vers une position de maintien, **caractérisé en ce que** le support (202) interagit avec un élément de blocage (218) qui bloque, dans la position d'utilisation du support (202), le retrait du col à boule (18) de l'élément de logement (16), par complémentarité de forme et qui libère le col à boule (18) dans la position de maintien du support (202).

2. Dispositif de remorquage selon la revendication 1, **caractérisé en ce que** le col à boule (18) comporte un évidement (222) dans lequel l'élément de blocage (218) peut être emboîté.

3. Dispositif de remorquage selon la revendication 2, **caractérisé en ce que** l'élément de blocage (218) est guidé de manière mobile dans un guidage (208) fixé au véhicule, et appuyé à l'encontre des forces de retrait du col à boule (18) ou de manière opposée à celui-ci.

4. Dispositif de remorquage selon la revendication 3, **caractérisé en ce que** le guidage (208) comporte deux surfaces d'appui (210, 212) parallèles à une direction de déplacement de l'élément de blocage (218), sur lesquelles l'élément de blocage (218) ou le support (202) comprenant l'élément de blocage (218) puisse être appuyé au moins dans la position d'utilisation.

5. Dispositif de remorquage selon la revendication 3 ou 4, **caractérisé en ce que** le guidage (208) est disposé dans l'élément de logement (16).

6. Dispositif de remorquage selon l'une des revendications précédentes, **caractérisé en ce que** le support (202) est logé de manière pivotante autour d'un axe (216) à un palier pivotant.

7. Dispositif de remorquage selon la revendication 6, **caractérisé en ce que** le palier pivotant comporte un axe de pivotement (216) orienté approximativement dans le sens longitudinal du véhicule.

8. Dispositif de remorquage selon la revendication 6 ou 7, **caractérisé en ce que** le palier pivotant (216) pour le support (202) est fixé au véhicule.

9. Dispositif de remorquage selon l'une des revendications précédentes, **caractérisé en ce que** le support (202) est logé de manière mobile à l'élément de logement (16).

10. Dispositif de remorquage selon l'une des revendications précédentes, **caractérisé en ce que** le support (202) peut être fixé dans la position d'utilisation ou la position de maintien.

11. Dispositif de remorquage selon la revendication 10, **caractérisé en ce que** le support (202) peut être fixé aussi bien dans la position d'utilisation que dans la position de maintien.

12. Dispositif de remorquage selon la revendication 10 ou 11, **caractérisé en ce que** le support (202) peut être fixé, à l'aide d'un dispositif d'encliquetage (224, 226, 228, 230) dans la position d'utilisation et/ou la position de maintien.

13. Dispositif de remorquage selon l'une des revendications précédentes, **caractérisé en ce que** le support (202) peut être fixé dans la position d'utilisation à l'aide d'un dispositif de fixation (352, 362).

14. Dispositif de remorquage selon la revendication 13, **caractérisé en ce que** le dispositif de fixation (352, 362) comporte un élément de fixation (352) pouvant être forcé en direction d'une position fixant le support (202).

15. Dispositif de remorquage selon l'une des revendications précédentes, **caractérisé en ce que** le support (202) agit à l'aide d'un mécanisme (310, 320) sur l'élément de blocage (218).

16. Dispositif de remorquage selon la revendication 15, **caractérisé en ce que** le support (202) agit à l'aide d'un mécanisme à clavette (310, 320) sur l'élément de blocage (218).

17. Dispositif de remorquage selon la revendication 15 ou 16, **caractérisé en ce qu'**avec le support (202), une coulisse (310) et un coulisseau (320) sont mobiles l'un par rapport à l'autre afin de déplacer l'élément de blocage (218) entre une position de blocage et une position de libération.

18. Dispositif de remorquage selon l'une des revendications 15 à 17, **caractérisé en ce qu'**entre le mécanisme (310, 320) et l'élément de blocage (218), se trouve un accumulateur de force élastique (332).

19. Dispositif de remorquage selon la revendication 18, **caractérisé en ce que** l'élément de blocage (218) est bloqué mécaniquement et manière non élastique, dans sa position bloquant le retrait de l'élément de verrouillage (22) de l'élément de logement (16) contre un mouvement en direction de la position de libération de l'élément de verrouillage (22), à l'aide du mécanisme (310, 320).

20. Dispositif de remorquage selon l'une des revendications 1 à 14, **caractérisé en ce que** le support (202) et l'élément de blocage (218) peuvent être déplacés ensemble.

21. Dispositif de remorquage selon la revendication 20, **caractérisé en ce que** le support (202) et l'élément de blocage (218) sont fixés ensemble.

22. Dispositif de remorquage selon la revendication 21, **caractérisé en ce que** l'élément de blocage (218) et le support (202) sont formés d'un seul bloc.

23. Dispositif de remorquage pour véhicules automobiles selon l'une des revendications précédentes, **caractérisé en ce que**, dans l'élément de verrouillage (22), se trouve un élément mobile (90), se déplaçant d'une position active à une position inactive à l'aide d'un élément d'actionnement manuel (26), qui est contraint à l'aide d'un ressort en direction de la position active et, un corps de verrouillage (76), qui peut être amené, à l'aide d'une coulisse (130) disposée sur l'élément mobile (90) et qui se déplace avec celui-ci, perpendiculairement à une direction de mouvement de l'élément mobile (90), d'une position de déverrouillage à une position de verrouillage et inversement, et qui s'emboîte, dans la position de verrouillage, dans un logement d'élément de verrouillage (54) de l'élément de logement (16) et qui verrouille ainsi l'élément de verrouillage (22) par rapport à l'élément de logement (16), et **en ce que** l'élément d'actionnement manuel (26) peut être déplacé d'une façon qui correspond à la mobilité de l'élément mobile (90).

24. Dispositif de remorquage selon la revendication 23, **caractérisé en ce que** l'élément d'actionnement manuel (26) et l'élément mobile (90) interagissent sans démultiplication.

25. Dispositif de remorquage selon la revendication 23 ou 24, **caractérisé en ce que** l'élément d'actionnement manuel (26) et l'élément mobile (90) sont mobiles le long de la même coulisse (142).

26. Dispositif de remorquage selon l'une des revendications 23 à 25, **caractérisé en ce que** l'élément d'actionnement manuel (26) et l'élément mobile (90) sont mobiles de manière linéaire.

27. Dispositif de remorquage selon l'une des revendications 23 à 26, **caractérisé en ce que** l'élément d'actionnement manuel (26) est disposé sur l'élément de verrouillage (22).

28. Dispositif de remorquage selon la revendication 27, **caractérisé en ce que** l'élément d'actionnement manuel (26) se trouve sur un côté de l'élément de verrouillage (22) opposé à un élément central (28) du col à boule (18).

29. Dispositif de remorquage selon l'une des revendications 23 à 26, **caractérisé en ce que** l'élément d'actionnement manuel (26') se trouve sur un côté de l'élément de verrouillage (22') orienté vers un élément central (28) du col à boule (18).

30. Dispositif de remorquage selon la revendication 29, **caractérisé en ce que** l'élément d'actionnement manuel (26') se trouve sur un côté de l'élément de verrouillage (22') orienté vers la boule d'accouplement (20).

31. Dispositif de remorquage selon l'une des revendications 23 à 30, **caractérisé en ce que** l'élément d'actionnement manuel (26) se trouve au niveau d'une face d'extrémité de l'élément de verrouillage (22).

32. Dispositif de remorquage selon l'une des revendications 23 à 31, **caractérisé en ce que** l'élément d'actionnement manuel (26, 26') est disposé de telle sorte qu'une force nécessaire à l'actionnement de celui-ci agit dans une direction (36, 36') qui comporte une composante dans une direction de retrait opposée à la direction d'insertion (74, 226).

33. Dispositif de remorquage selon l'une des revendications 23 à 32, **caractérisé en ce que** la coulisse (130) comporte une partie creuse (132) qui reçoit le corps de verrouillage (90) dans la position de déverrouillage et une partie de compression (138) maintenant le corps de verrouillage (90) dans la position de verrouillage.

34. Dispositif de remorquage selon la revendication 33, **caractérisé en ce qu'**après la partie creuse (132), se trouve une partie d'expulsion (134) s'étendant en direction de la partie de compression (138), qui présente une pente plus importante que la partie de compression (138) par rapport à la direction de déplacement (142).

35. Dispositif de remorquage selon la revendication 34, **caractérisé en ce qu'**entre la partie d'expulsion (134) et la partie de compression (138) se trouve une partie de fixation (136).

36. Dispositif de remorquage selon la revendication 35, **caractérisé en ce que** la partie de fixation (136) présente une pente par rapport à la direction de déplacement, qui correspond à un angle maximal pour lequel un auto-blocage est réalisé.

37. Dispositif de remorquage selon l'une des revendications 23 à 36, **caractérisé en ce qu'**un carter (70) de l'élément de verrouillage (22) est constitué d'une partie d'extrémité du col à boule (18).

38. Dispositif de remorquage selon l'une des revendications 23 à 37, **caractérisé en ce que**, lorsqu'un élément de verrouillage (22, 22') est inséré dans l'élément de logement (16), un axe central (50, 270) de l'élément de verrouillage (22, 22') est oblique ou perpendiculaire par rapport à une verticale.

39. Dispositif de remorquage selon l'une des revendications 23 à 38, **caractérisé en ce que**, sur l'élément de verrouillage (22) se trouve un dispositif de maintien (150), grâce auquel, dans sa position de maintien, l'élément mobile (90) peut être fixé dans la position inactive et qui, lors de l'actionnement, passe dans une position de libération et libère l'élément mobile.

40. Dispositif de remorquage selon la revendication 39, **caractérisé en ce que** l'élément de logement (16) est muni d'une surface d'actionnement (52) grâce à laquelle un actionnement du dispositif de maintien (150) est réalisé.

41. Dispositif de remorquage selon l'une des revendications 23 à 40, **caractérisé en ce que** l'élément d'actionnement manuel (26) est recouvert d'un couvercle de protection déformable (34).
